(19) Europäisches Patentamt / European Patent Office / Office européen des brevets

(11) **EP 4 734 086 A1**

(12) **EUROPEAN PATENT APPLICATION**

(43) Date of publication:
**29.04.2026 Bulletin 2026/18**

(21) Application number: 25209377.8

(22) Date of filing: **17.10.2025**

(51) International Patent Classification (IPC):
**G07D 7/1205** (2016.01)

(52) Cooperative Patent Classification (CPC):
**G07D 7/1205**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.10.2024 JP 2024186064**

(71) Applicant: **GLORY LTD.**
**Himeji-shi**
**Hyogo 670-8567 (JP)**

(72) Inventor: **SATO, Takeshi**
**Himeji-shi 670-8567 (JP)**

(74) Representative: **SSM Sandmair**
**Patentanwälte Rechtsanwalt**
**Partnerschaft mbB**
**Joseph-Wild-Straße 20**
**81829 München (DE)**

(54) **SHEET RECOGNITION UNIT, SHEET HANDLING DEVICE, SHEET RECOGNITION METHOD, AND SHEET RECOGNITION PROGRAM**

(57)     Provided are a sheet recognition unit, a sheet handling device, a sheet recognition method, and a sheet recognition program capable of recognizing a sheet with high accuracy based on a fluorescence emission amount of fluorescent ink printed on the sheet. The sheet recognition unit includes: a light source capable of emitting at least first light and excitation light to a sheet including a printed portion to be recognized and a non-printed portion; a light receiving unit that receives reflective light obtained by reflecting the first light from the sheet to output a reflective light detection signal, and receives fluorescence emitted from the sheet irradiated with the excitation light to output a fluorescence detection signal; a calculation unit that calculates a value P obtained by multiplying an output value of a fluorescence detection signal of the non-printed portion by a density ratio $\alpha$ between a reflective light detection signal of the printed portion and a reflective light detection signal of the non-printed portion, and calculates a value F obtained by subtracting the value P from an output value of a fluorescence detection signal of the printed portion; and a recognition unit that recognizes the sheet based on the value F calculated by the calculation unit.

FIG.1

EP 4 734 086 A1

Processed by Luminess, 75001 PARIS (FR)

## Description

TECHNICAL FIELD

The present disclosure relates to a sheet recognition unit, a sheet handling device, a sheet recognition method, and a sheet recognition program.

BACKGROUND ART

Conventionally, a photoluminescent compound is known as a security element attached to a sheet such as a banknote. The photoluminescent compound is excited by ultraviolet light to generate fluorescence emission or phosphorescence emission. As a method for detecting these characteristics, for example, those described in the following literature are known.

JP 2003-162748 A discloses a sheet fluorescence detection sensor that simultaneously performs reflective light detection and transmissive light detection, and compares the reflective light detection and the transmissive light detection. Based on the comparison, the sensor determines whether fluorescent ink is printed on a front surface of a banknote or on a back surface of the banknote, or whether the sheet itself contains a fluorescent component.

JP 7473677 B discloses an optical sensor that detects light from a sheet on which at least one type of monochromatic ink among n types of monochromatic ink is printed. The optical sensor includes a light source, a light receiving unit having first to (n-1)-th light receiving elements, a storage unit, and a correction processing unit. The storage unit stores a correction value based on reference data acquired by the light receiving unit independently receiving light emitted from the first to n-th monochromatic ink for each type of monochromatic ink. The correction processing unit executes correction processing on detection data acquired by the light receiving unit receiving light emitted from the sheet irradiated with light from the light source, using a correction value based on an inverse matrix of a matrix obtained by normalizing a predetermined matrix A with n rows and n columns acquired in advance.

CITATION LIST

- Patent Literature

    Patent Literature 1: JP 2003-162748 A
    Patent Literature 2: JP 7473677 B

SUMMARY OF INVENTION

- Technical Problem

However, the conventional sensor detects fluorescence emitted from a sheet itself, which is a base of the sheet, and fluorescence emitted from fluorescent ink printed on the sheet together. Further, the fluorescence emission amount of the fluorescent ink and the fluorescence emission amount of a sheet may vary depending on the state of the sheet, such as the presence or absence of a base color (ink other than the fluorescent ink) and smudge of the sheet. Therefore, the conventional sensor cannot accurately detect the fluorescence emission amount of the fluorescent ink. In particular, in a case where the fluorescence emission amount of the fluorescent ink is small, the fluorescent ink cannot be accurately detected, and thus the accuracy of recognition processing, such as authentication, based on the detection result may be deteriorated.

The present disclosure has been made in view of the above circumstances, and an object thereof is to provide a sheet recognition unit, a sheet handling device, a sheet recognition method, and a sheet recognition program capable of recognizing a sheet with high accuracy based on a fluorescence emission amount of fluorescent ink printed on the sheet.

- Solution to Problem

In order to solve the above problems and achieve the object, (1) a sheet recognition unit according to a first aspect of the present disclosure includes: a light source capable of emitting at least first light and excitation light to a sheet including a printed portion to be recognized and a non-printed portion; a light receiving unit that receives reflective light obtained by reflecting the first light from the sheet to output a reflective light detection signal, and receives fluorescence emitted from the sheet irradiated with the excitation light to output a fluorescence detection signal; a calculation unit that calculates a value P obtained by multiplying an output value of a fluorescence detection signal of the non-printed portion by a density ratio $\alpha$ between a reflective light detection signal of the printed portion and a reflective light detection signal of the non-printed portion, and calculates a value F obtained by subtracting the value P from an output value of a fluorescence detection signal of the printed portion; and a recognition unit that recognizes the sheet based on the value F calculated by the calculation unit.

(2) In the sheet recognition unit described in (1), the light receiving unit may output a color detection signal as the reflective light detection signal, and the density ratio $\alpha$ may be a color density ratio.

(3) In the sheet recognition unit described in (2), the light receiving unit may output reflective light detection signals in R, G, and B wavelength bands as the reflective light detection signal, and the color density ratio may be calculated based on the reflective light detection signals in the R, G, and B wavelength bands.

(4) In the sheet recognition unit described in (1) or (3), the light receiving unit may output a reflective light detection signal in an infrared range as the reflective light detection signal, and the density ratio $\alpha$ may be calculated based on the reflective light detection signal in the infrared range.

(5) In the sheet recognition unit described in any one of (1) to (4), the calculation unit may calculate the density ratio $\alpha$ based on the reflective light detection signal of the printed portion and the reflective light detection signal of the non-printed portion during handling of a sheet to be recognized.

(6) In the sheet recognition unit described in any one of (1) to (4), the density ratio $\alpha$ may be calculated in advance at a stage before handling of a sheet to be recognized.

(7) The sheet recognition unit described in any one of (1) to (6) may further include an image generation unit that generates a reflective light image based on the reflective light detection signal and generates a fluorescent image based on the fluorescence detection signal, and the calculation unit may acquire the reflective light detection signals of the printed portion and the non-printed portion based on the reflective light image, and may acquire the fluorescence detection signals of the printed portion and the non-printed portion based on the fluorescent image.

(8) In the sheet recognition unit described in any one of (1) to (7), the light source may emit at least one of visible light or infrared light as the first light.

(9) A sheet handling device according to a second aspect of the present disclosure includes the sheet recognition unit described in any one of (1) to (8).

(10) A sheet recognition method according to a third aspect of the present invention includes: emitting first light from a light source to a sheet including a printed portion to be recognized and a non-printed portion; receiving, at a light receiving unit, reflective light obtained by reflecting the first light from the sheet to output a reflective light detection signal; emitting excitation light from the light source to the sheet; receiving, at the light receiving unit, fluorescence emitted from the sheet irradiated with the excitation light to output a fluorescence detection signal; calculating a value P by multiplying an output value of a fluorescence detection signal of the non-printed portion by a density ratio $\alpha$ between a reflective light detection signal of the printed portion and a reflective light detection signal of the non-printed portion; calculating a value F by subtracting the value P from an output value of a fluorescence detection signal of the printed portion; and recognizing the sheet based on the value F.

(11) A sheet recognition program according to a fourth aspect of the present disclosure causes a sheet recognition unit to perform processing of: emitting first light from a light source to a sheet including a printed portion to be recognized and a non-printed portion; receiving, at a light receiving unit, reflective light obtained by reflecting the first light from the sheet to output a reflective light detection signal; emitting excitation light from the light source to the sheet; receiving, at the light receiving unit, fluorescence emitted from the sheet irradiated with the excitation light to output a fluorescence detection signal; calculating a value P by multiplying an output value of a fluorescence detection signal of the non-printed portion by a density ratio $\alpha$ between a reflective light detection signal of the printed portion and a reflective light detection signal of the non-printed portion; calculating a value F by subtracting the value P from an output value of a fluorescence detection signal of the printed portion; and recognizing the sheet based on the value F.

- Advantageous Effects of Invention

The present disclosure can provide a sheet recognition unit, a sheet handling device, a sheet recognition method, and a sheet recognition program capable of recognizing a sheet with high accuracy based on a fluorescence emission amount of fluorescent ink printed on the sheet.

BRIEF DESCRIPTION OF DRAWINGS

FIG. 1 is a plan view schematically illustrating an example of a genuine banknote, and illustrating a state of visible light irradiation;

FIG. 2 is a plan view schematically illustrating an example of a genuine banknote, and illustrating a state of excitation light irradiation;

FIG. 3 is a schematic diagram illustrating an example of a configuration of a sheet recognition unit according to a first embodiment, and is a diagram viewed from an oblique direction;

FIG. 4 is a cross-sectional view schematically illustrating a state where a printed portion and a non-printed portion of a banknote are irradiated with first light and excitation light, respectively;

FIG. 5 is a flowchart describing an example of an operation of the sheet recognition unit according to the first embodiment;

FIG. 6 is a schematic diagram illustrating an example of a configuration of a sheet recognition unit according to a second embodiment, and is a diagram viewed from an oblique direction;

FIG. 7 is a flowchart describing an example of an operation of the sheet recognition unit according to the second embodiment;

FIG. 8 is a schematic perspective view illustrating an appearance of an example of a sheet handling device according to a third embodiment;

FIG. 9 is a schematic cross-sectional view describing an example of a configuration of an imaging unit included in a sheet recognition unit according to the third embodiment;

FIG. 10 is a schematic perspective view describing an example of a configuration of a light receiving unit included in the sheet recognition unit according to the third embodiment;

FIG. 11 is a graph illustrating wavelength characteristics of color filters of the light receiving unit illustrated in FIG. 10;

FIG. 12 is a schematic perspective view describing another example of a configuration of the light receiving unit included in the sheet recognition unit according to the third embodiment;

FIG. 13 is a graph illustrating wavelength characteristics of the color filters of the light receiving unit illustrated in FIG. 12;

FIG. 14 is a block diagram describing an example of a configuration of the sheet recognition unit according to the third embodiment;

FIG. 15 is a diagram schematically illustrating an example of a reflective light image of a banknote to be recognized, the banknote being authenticated by fluorescence measurement;

FIG. 16 is a diagram schematically illustrating an example of a fluorescent image of a banknote to be recognized, the banknote being authenticated by fluorescence measurement;

FIG. 17 is a diagram showing a reflective light image of a test medium and color data (B, G, and R) in a specific region thereof, and a fluorescent image of the test medium and color data (B, G, and R) in a specific region thereof;

FIG. 18 shows results of calculating a color density ratio $\alpha$ using the data illustrated in FIG. 17 and results of calculating a fluorescence emission amount P of a base (white sheet) of a printed portion using the calculated color density ratio $\alpha$;

FIG. 19 shows results of calculating the fluorescence emission amount of only fluorescent ink using the results (color density ratio $\alpha$) illustrated in FIG. 18;

FIG. 20 shows results of calculating the fluorescence emission amount of only fluorescent ink without using the color density ratio $\alpha$;

FIG. 21 shows results of calculating the fluorescence emission amount of only the fluorescent ink from the fluorescence spectrum for a region F1_1 where the fluorescent ink is printed on a white sheet portion;

FIG. 22 shows results of calculating the fluorescence emission amount of only fluorescent ink from the fluorescence spectrum for a region Fl_2 where light cyan and the fluorescent ink are printed on the white sheet portion; and

FIG. 23 is a diagram collectively showing the results (respective fluorescence emission amounts) shown in FIGS. 19 to 22.

DESCRIPTION OF EMBODIMENTS

Hereinafter, embodiments of a sheet recognition unit, a sheet handling device, a sheet recognition method, and a sheet recognition program of the present disclosure will be described in detail with reference to the drawings. Various sheets applicable as target sheets of the present disclosure include banknotes, checks, vouchers, bills, forms, securities, and card-like media, but hereinafter, the present disclosure will be described using devices for banknotes as an example.

Note that the sheet recognition program may be introduced in advance into the sheet recognition unit and the sheet handling device, or may be provided to an operator with the program being recorded in a computer-readable recording medium or provided via a network.

As described above, the sheet recognition unit and the sheet handling device of the present disclosure may include a storage unit including a storage device such as a semiconductor memory (random-access memory [RAM] or read-only memory [ROM]) and a hard disk.

In the following description, the same reference signs are appropriately used for the same portions or portions having similar functions between different drawings, and repeated description thereof is appropriately omitted. Further, in the drawings illustrating a structure, XYZ coordinate systems orthogonal to each other are appropriately illustrated.

(First Embodiment)

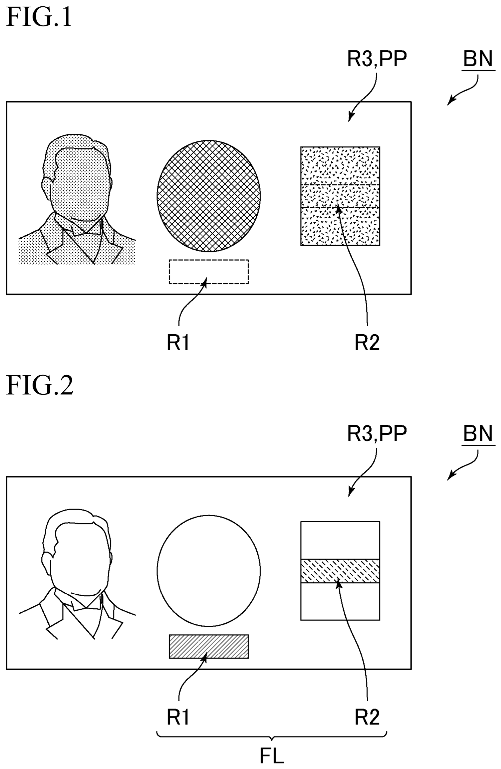

First, a banknote to be recognized will be described. As illustrated in FIG. 1, color printing is performed on a predetermined region of a banknote BN to be recognized, and a portrait or a pattern is drawn on the banknote BN. As illustrated in FIG. 2, fluorescent ink to be authenticated is printed in predetermined regions, such as regions R1 and R2, on the banknote BN to be recognized. That is, a printed portion FL to be recognized corresponds to the region R1 and/or the region R2 where the fluorescent ink has been printed. In the printed portion FL to be recognized, ink other than fluorescent ink may not be printed as in the region R1, or ink other than the fluorescent ink, for example, color printing ink may be printed as in the region R2. The banknote BN to be recognized includes a region R3 where no ink has been printed exists, and a base (base material) of the banknote BN, for example, the sheet itself is exposed in the region R3. That is, the region R3 corresponds to a non-printed portion PP of the banknote BN.

In a case where a plurality of printed portions FL to be recognized exist (for example, the regions R1 and R2), the following processing can be performed on each of the printed portions FL.

The fluorescent ink contains one or more types of photoluminescent compounds, and emits fluorescence (photoluminescence that can be detected during irradiation with excitation light) in a predetermined wavelength band during irradiation with excitation light (for example, ultraviolet light). The wavelength of the fluorescence emitted from the fluorescent ink is not limited, and the fluorescent ink may emit fluorescence in a visible range and/or an infrared range, or may emit fluorescence in a plurality of wavelength bands. Similarly, the fluorescence spectrum of the fluorescent ink may have at least one peak in the visible range and/or the infrared range.

In a case where the plurality of printed portions FL to be recognized exist (for example, the regions R1 and R2), the same type of fluorescent ink may be printed on each printed portion FL, or different types of fluorescent inks, for example, a plurality of types of fluorescent inks having different light emission characteristics may be printed on the printed portions FL. Specifically, for example, fluorescent inks that emit fluorescence in mutually different wavelength bands may be printed.

The fluorescent ink may hardly emit light even when visible light is emitted, and transmit visible light. As a result, the fluorescent ink may not be visually recognized by human eyes in a situation where visible light is emitted, for example, under natural light or under general artificial illumination (see FIG. 1). On the other hand, in a case where the fluorescent ink is irradiated with excitation light, the fluorescent ink emits light at least in the visible range. As a result, its fluorescent component may be visually recognized by human eyes (see FIG. 2).

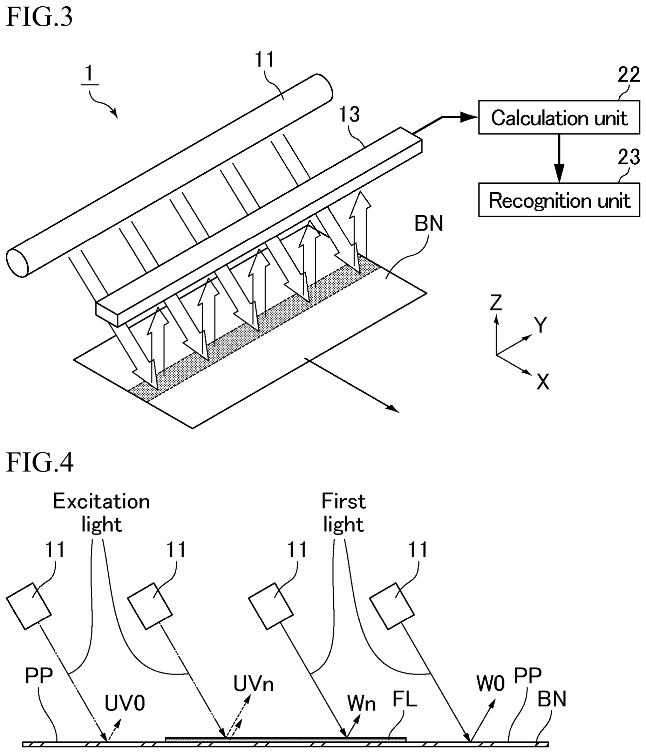

A configuration of the sheet recognition unit according to the present embodiment will be described below with reference to FIG. 3.

As illustrated in FIG. 3, the sheet recognition unit 1 according to the present embodiment detects fluorescence emitted from the banknote BN having the printed portion FL to be recognized and the non-printed portion PP. The sheet recognition unit 1 includes a light source 11, a light receiving unit 13, a calculation unit 22, and a recognition unit 23. The light source 11 is capable of emitting at least first light and excitation light to the banknote BN. The light receiving unit 13 receives reflective light obtained by reflecting the first light from the banknote BN to output a reflective light detection signal, and receives fluorescence emitted from the banknote BN irradiated with the excitation light to output a fluorescence detection signal. The calculation unit 22 calculates (estimates) a fluorescence emission amount of the fluorescent ink itself of the printed portion FL to be recognized using the reflective light detection signal and the fluorescence detection signal. The recognition unit 23 recognizes the banknote BN to be recognized, based on a calculation result of the calculation unit 22.

Here, the banknote BN to be recognized may be transported in an X direction in an XY plane. A Y direction may correspond to a main scanning direction of the light receiving unit 13, and the X direction may correspond to a sub-scanning direction of the light receiving unit 13.

The calculation unit 22 calculates a value P by multiplying an output value of the fluorescence detection signal of the non-printed portion PP by a density ratio $\alpha$ between the reflective light detection signal of the printed portion FL and the reflective light detection signal of the non-printed portion PP, and calculates a value F by subtracting the value P from an output value of the fluorescence detection signal of the printed portion FL. The recognition unit 23 recognizes the banknote BN to be recognized, based on the value F calculated by the calculation unit 22. As a result, the banknote BN can be recognized with high accuracy based on the fluorescence emission amount of the fluorescent ink printed on the printed portion FL to be recognized. In such a way, the recognition unit 23 may authenticate the banknote BN to be recognized (the fluorescent ink to be recognized).

Here, functions and effects of the calculation unit 22 and the recognition unit 23 will be described in more detail with reference to FIG. 4.

In order to calculate the fluorescence emission amount of the fluorescent ink itself, an unnecessary fluorescence emission amount of a base has to be removed from the output value of the fluorescence detection signal. Therefore, normally, it is conceivable to subtract the fluorescence emission amount of the white sheet, which is the base of the non-printed portion PP without the fluorescent ink, as it is from the output value of the fluorescence detection signal of the printed portion FL. That is, as illustrated in FIG. 4, excitation light is emitted from the light source 11 to the printed portion FL where the fluorescent ink is printed, the output value of the fluorescence detection signal obtained by receiving the fluorescence emitted from the printed portion FL is represented by UVn, excitation light is emitted from the light source 11 to the non-printed portion PP where no ink such as fluorescent ink is printed, and the output value of the fluorescence detection signal obtained by receiving the fluorescence emitted from the non-printed portion PP is represented by UV0. At this time, a value calculated using following formula (A) is set as the fluorescence emission amount of the fluorescent ink.

$$UVn\text{-}UV0 \quad (A)$$

However, in this case, for example, if the base of the non-printed portion PP is colored, the fluorescence emission amount of the fluorescent ink decreases, and (the fluorescence emission amount of the fluorescent ink) < (the fluorescence emission amount of the sheet of the non-printed portion) may be satisfied. As a result, the fluorescence emission amount of the fluorescent ink may not be correctly detected. In the printed portion FL, excitation light is absorbed by the fluorescent ink and fluorescence emitted from the base may be absorbed by the fluorescent ink printed thereon. Therefore, the fluorescence emission amount of the base in the printed portion FL should be smaller than the fluorescence emission amount of the non-printed portion PP, but this point is not taken into consideration in the above-described formula (A).

Therefore, in the present embodiment, the value P, which is obtained by multiplying the output value of the fluorescence detection signal of the non-printed portion PP by the density ratio $\alpha$ between the reflective light detection signal of the printed portion FL and the reflective light detection signal of the non-printed portion PP, is subtracted from the output value of the fluorescence detection signal of the printed portion FL. By multiplying the output value of the fluorescence detection signal of the non-printed portion PP by the density ratio $\alpha$, the influence of absorption of the excitation light and fluorescence of the base due to the fluorescent ink can be reduced.

More specifically, first light different from the excitation light is emitted from the light source 11 to the printed portion FL and the non-printed portion PP, and the reflective light reflected from the printed portion FL and the non-printed portion PP is received. The reflective light detection signals obtained in such a manner are used. As illustrated in FIG. 4, Wn represents an output value of the reflective light detection signal obtained by irradiating the printed portion FL with the first light from the light source 11 and receiving the reflective light reflected from the printed portion FL, and W0 represents an output value of the reflective light detection signal obtained by irradiating the non-printed portion PP with the first light from the light source 11 and receiving the reflective light reflected from the non-printed portion PP. In this case, a value calculated using the following formula (B) is set as the fluorescence emission amount of the fluorescent ink.

$$UVn - UV0 \times (Wn/W0) \quad (B)$$

Here, the term of Wn/W0 corresponds to the density ratio $\alpha$ between the reflective light detection signal of the printed portion FL and the reflective light detection signal of the non-printed portion PP. The term of $UV0 \times (Wn/W0)$ corresponds to the value P obtained by multiplying the output value of the fluorescence detection signal of the non-printed portion PP by the density ratio $\alpha$, and UVn corresponds to the output value of the fluorescence detection signal of the printed portion FL. The value calculated using the above formula (B) corresponds to the value F obtained by subtracting the value P from the output value of the fluorescence detection signal of the printed portion FL.

Thus, while the influence of the absorption of the excitation light and fluorescence of the base due to the fluorescent ink is being reduced, the unnecessary fluorescence emission amount of the base can be removed from the output value of the fluorescence detection signal in the printed portion FL. That is, since the fluorescence of the sheet and the fluorescence from an original fluorescent ink (phosphor) can be separated from each other more accurately, the presence or absence of the fluorescent ink (phosphor) can be detected and quantitative evaluation can be performed with high accuracy, leading to improvement of counterfeiting detection accuracy.

The density ratio $\alpha$ indicates a ratio obtained by dividing the output value of the reflective light detection signal of the printed portion FL by the output value of the reflective light detection signal of the non-printed portion PP as expressed by Wn/W0.

The "fluorescence emission amount" is a value indicating the intensity (brightness) of fluorescence.

The points where the output values UVn and Wn are detected (point where the fluorescence detection signal and the reflective light detection signal are acquired from the printed portion FL) are not limited as long as the points are in the printed portion where the same fluorescent ink has been printed. The detection may be performed at a substantially identical point, points close to each other, or points away from each other. In the case of detection at points away from each other, the points may be points where the bases and the states of ink other than the fluorescent ink are substantially the same, and in that case, the points may be points where the output values similar to the value obtained at the identical point can be obtained.

Similarly, the points where the output values UV0 and WO are detected (points where the fluorescence detection signal and the reflective light detection signal are acquired from the non-printed portion PP) are not limited as long as the points are in a non-printed portion where no ink is printed. The detection may be performed at a substantially identical point, points close to each other, or points away from each other.

Each of the targets for detecting these output values may be one point, a plurality of points, or a region having an area expansion. In a case of detection at a plurality of points, the value F may be calculated for each point. In the case of detection in the region, an average value of output values obtained at the respective points included in the region may be used as the output value. When the target is expanded from one point to a plurality of points and a region, the calculation accuracy of the fluorescence emission amount of the fluorescent ink is improved, but it takes longer time for arithmetic processing. On the other hand, when the target is narrowed from the region to a plurality of points or one point, the calculation accuracy of the fluorescence emission amount of the fluorescent ink may be degraded although the time for the arithmetic processing is shortened.

The target for acquiring the fluorescence detection signal and the reflective light detection signal from the printed portion FL to be recognized and the target for acquiring the fluorescence detection signal and the reflective light detection signal from the non-printed portion PP may be prepared in advance as template information in accordance with each type and each orientation of the banknote BN to be recognized. In this case, the recognition unit 23 may first recognize the type and orientation of the banknote BN to be recognized. The calculation unit 22 may acquire the fluorescence detection signal and the reflective light detection signal at a target point or in a region appropriate to the type and orientation of the banknote BN to be recognized, based on the recognition results with reference to the template information.

The template information is reference information used for the recognition processing, and defines at least one type or more (usually two or more types) of attributes (features) of each type of banknotes to be recognized.

In this specification, the type of a banknote includes a denomination (a concept indicating a country (including a region), currency, and an amount of the banknote). The type of a banknote further includes a concept indicating a country (including a region) and currency of the banknote, such as U.S. dollars, Euros, Japanese yen, or Hong Kong dollars regardless of the amount of the banknote.

The orientation of a banknote may include four orientations indicating face-up and portrait-up, face-up and portrait-down, face-down and portrait-up, and face-down and portrait-down, respectively.

The target for acquiring the fluorescence detection signal and the reflective light detection signal from the printed portion FL to be recognized and the target for acquiring the fluorescence detection signal and the reflective light detection signal from the non-printed portion PP are not prepared in advance as template information but may be determined during handling of the banknote BN to be recognized. In this case, for example, the point where the output value of the reflective light detection signal is the maximum value may be set as a target point where the fluorescence detection signal and the reflective light detection signal are acquired from the non-printed portion PP. The point where the output value of the fluorescence detection signal is the maximum value may be set as a target point where the fluorescence detection signal and the reflective light detection signal are acquired from the printed portion FL.

The light source 11 irradiates the banknote BN with at least first light and excitation light. The light source 11 may irradiate the banknote BN with the first light and the excitation light at different timings. That is, the irradiation period of the first light may not temporally overlap with the irradiation period of the excitation light. The light source 11 may be disposed on the same side as the light receiving unit 13 with respect to the banknote BN. The first light and the excitation light are light in different wavelength bands, and examples of the first light include visible light and infrared light, and examples of the excitation light include ultraviolet light, visible light, and infrared light.

As described above, the light source 11 may emit at least one of visible light or infrared light as the first light. That is, the reflective light detection signal may be a signal obtained by detecting reflective light in the visible range, may be a signal obtained by detecting reflective light in the infrared range, or may include the signal obtained by detecting the reflective light in the visible range and the signal obtained by detecting the reflective light in the infrared range.

The light source 11 may be longer than the length of the banknote BN in the Y direction, and may irradiate the banknote BN entirely in the Y direction with light linearly extending along the Y direction. In this case, the light source 11 may include a linear rod-shaped transparent light guide, and light emitting elements (usually, a plurality of light emitting diodes (LEDs), for example) facing at least one of both end surfaces of the light guide. The light source 11 may irradiate the banknote BN with light via the light guide.

The light receiving unit 13 is configured to be able to receive reflective light reflected from the banknote BN while first light is being emitted and fluorescence emitted from the banknote BN while excitation light is being emitted. That is, the light receiving unit 13 is configured to be able to detect the reflective light and fluorescence from the banknote BN. At this time, the light receiving unit 13 can function as a sensor having sensitivity at least in the wavelength band of the reflective light of the first light and in the wavelength band of the fluorescence emitted from the fluorescent ink. The light receiving unit 13 then outputs an electric signal (which may be a digital signal) corresponding to the amount of incident light (light receiving amount). That is, the reflective light detection signal and the fluorescence detection signal are electric signals that depend on the amounts of the incident light of the reflective light and fluorescence emitted from the banknote BN during turn-on periods of first light and the excitation light.

The light receiving unit 13 may include one or more light receiving elements, and the light receiving elements may receive light, convert the light into an electric signal depending on the amount of incident light, and output the electric signal.

The light receiving unit 13 may be longer than the length of the banknote BN in the Y direction, and may receive light transmitted through, reflected from, or emitted from the banknote BN entirely in the Y direction.

The light receiving unit 13 may output an electric signal depending on the amount of incident light as image data. At this time, the light receiving unit 13 may include a plurality of pixels arranged in a row in the Y direction (main scanning direction). That is, the light receiving unit 13 may output an electric signal depending on the amount of incident light at a plurality of channels corresponding to the plurality of pixels (positions in the Y direction (main scanning direction)). Note that the channels (columns) are numbers sequentially allocated to the light receiving elements (imaging elements) in the Y direction. At this time, the light receiving unit 13 may output, as image data, line data that is data related to the light simultaneously received at each channel. The image data of the entire banknote BN may be output by repeating irradiation with light from the light source 11 and reception of light by the light receiving unit 13 while transporting the banknote BN in the X direction (sub-scanning direction).

As described above, the light source 11 and the light receiving unit 13 may acquire the image of the entire banknote BN by continuously and repeatedly executing imaging of a predetermined cycle as one period.

In this specification, one cycle refers to a control pattern in which the timing of turning on and off the light emitting elements in each wavelength band, signal reading, and the like are set. The fluorescence detection signal may be acquired from an entire sheet by continuously and repeatedly executing the control pattern of one cycle as one period. One cycle may indicate a periodic control pattern related to turning-on, turning-off, and light reception, the control pattern being set to acquire a reflective light image and/or transmissive light image of the sheet.

The reflective light image is an image based on light emitted from a light source disposed on the same side as the light receiving unit with respect to the sheet and reflected from the sheet. The transmissive light image is an image based on light emitted from a light source disposed on an opposite side from the light receiving unit with respect to the sheet and transmitted through the sheet. Therefore, the reflective light image and the transmissive light image are distinguished from a fluorescent image based on fluorescence emitted from a sheet.

The image data that can be acquired by the light receiving unit 13 includes a plurality of pixels arranged in a matrix pattern in the Y direction (main scanning direction) and the X direction (sub-scanning direction). An address of each pixel is specified by a channel (column) of the light receiving unit 13 corresponding to the position in the Y direction and a line (row) corresponding to the position in the X direction. The line (row) is a number sequentially allocated to the line data sequentially output from the light receiving unit 13.

Further, the light receiving unit 13 may receive light in a plurality of wavelength bands coming from the banknote BN and output an electric signal (the reflective light detection signal and the fluorescence detection signal) for each of the plurality of wavelength bands. In this case, each pixel may include a plurality of light receiving elements that selectively receive light in different wavelength bands.

Examples of the plurality of wavelength bands in which the light receiving unit 13 can selectively receive light include red (R), green (G), blue (B), and infrared (IR) bands.

In this specification, blue means light (color) having a wavelength of approximately 400 to 500 nm, and may be light (color) having a peak wavelength in this wavelength band. Green means light (color) having a wavelength of approximately 500 to 600 nm, and may be light (color) having a peak wavelength in this wavelength band. Red means light (color) having a wavelength of approximately 600 to 750 nm, and may be light (color) having a peak wavelength in this wavelength band. The infrared light means light having a wavelength of approximately 750 nm or more, and may be light having a peak wavelength in this wavelength band. The near-infrared light means light having a wavelength of approximately 750 to 1500 nm, and may be light having a peak wavelength in this wavelength band.

The light receiving unit 13 may collectively receive the reflective light or fluorescence in the visible range and the reflective light or fluorescence in the infrared range emitted from the banknote BN without separating them, and output a reflective light detection signal or a fluorescence detection signal including a signal value that depends on the light amount of the sum of both the components. In this case, a spectral overlap correction may be made on the signal value that depends on the light amount of the sum of both the components. As result, the signal value may be separated into a signal amount that depends on the reflective light or fluorescence in the visible range and a signal amount that depends on the reflective light or fluorescence in the infrared range. The separated signal amounts may be used as the output value of the visible light and the output value of the infrared light in the banknote BN.

On the other hand, the light receiving unit 13 may separate the reflective light or fluorescence in the visible range and the reflective light or fluorescence in the infrared range emitted from the banknote BN from each other, receive them independently, and output signal values that respectively depend on the light amounts of the respective components. In this case, the signal values can be used as output value of the visible light and the output value of the infrared light of the banknote BN, respectively, without making the spectral overlap correction.

A specific method for making the spectral overlap correction is not limited, and for example, the method described in JP 7473677 B may be used.

The light receiving unit 13 may output a color detection signal as the reflective light detection signal, and the density ratio $\alpha$ may be a color density ratio. As a result, the value F can be calculated depending on the tint of each of the printed portion FL and the non-printed portion PP of the banknote BN to be recognized, and the fluorescence emission amount in consideration of the color of the fluorescent ink can be accurately calculated.

More specifically, the light receiving unit 13 may output reflective light detection signals in red (R), green (G), and blue (B) wavelength bands as the reflective light detection signal, and the color density ratio may be calculated based on the reflective light detection signals in the R, G, and B wavelength bands. Thus, the fluorescence emission amount of the fluorescent ink can be calculated using a general optical sensor using three primary colors of RGB light, for example, an optical line sensor.

In this case, the color density ratio may be calculated for each of the reflective light detection signals in the R, G, and B wavelength bands. That is, the color density ratio may include a ratio $\alpha\_R$, a ratio $\alpha\_G$, and a ratio $\alpha\_B$. The ratio $\alpha\_R$ is obtained by dividing the output value of the red reflective light detection signal of the printed portion FL by the output value of the red reflective light detection signal of the non-printed portion PP. The ratio $\alpha\_G$ is obtained by dividing the output value of the green reflective light detection signal of the printed portion FL by the output value of the green reflective light detection signal of the non-printed portion PP. The ratio $\alpha\_B$ is obtained by dividing the output value of the blue reflective light detection signal of the printed portion FL by the output value of the blue reflective light detection signal of the non-printed portion PP.

The calculation unit 22 may calculate the value F for each of the R, G, and B wavelength bands using the ratios $\alpha\_R$, $\alpha\_G$, and $\alpha\_B$. That is, values calculated using the following formulas (C1) to (C3) may be used as the fluorescence emission amount of the fluorescent ink.

$$\text{UVn\_R} - \text{UV0\_R} \times \alpha\_R \quad (C1)$$

$$\text{UVn\_G} - \text{UV0\_G} \times \alpha\_G \quad (C2)$$

$$\text{UVn\_B} - \text{UV0\_B} \times \alpha\_B \quad (C3)$$

Here, UVn_R, UVn_G, and UVn_B respectively indicate output values of red, green, and blue fluorescence detection signals of the printed portion FL, and UV0_R, UV0_G, and UV0_B respectively indicate output values of red, green, and blue fluorescence detection signals of the non-printed portion PP.

The light receiving unit 13 may output the reflective light detection signal in the infrared range as the reflective light detection signal, and the density ratio $\alpha$ may be calculated based on the reflective light detection signal in the infrared range. As a result, the value F can be calculated depending on infrared characteristics of each of the printed portion FL and the non-printed portion PP of the banknote BN to be recognized, and the fluorescence emission amount in consideration of the infrared characteristics of the fluorescent ink can be accurately calculated.

More specifically, the density ratio $\alpha$ may be a ratio $\alpha\_IR$ obtained by dividing the output value of the reflective light detection signal in the infrared range of the printed portion FL by the output value of the reflective light detection signal in the infrared range of the non-printed portion PP. The calculation unit 22 may calculate the value F using the ratio $\alpha\_IR$. That is, a value calculated using the following formula (D) may be used as the fluorescence emission amount of the fluorescent ink.

$$\text{UVn\_IR} - \text{UV0\_IR} \times \alpha\_IR \quad (D)$$

Here, UVn_IR indicates an output value of the fluorescence detection signal in the infrared range of the printed portion FL, and UV0_IR indicates an output value of the fluorescence detection signal in the infrared range of the non-printed portion PP.

Further, the light receiving unit 13 may output the color detection signal and the reflective light detection signal in the infrared range as the reflective light detection signal. The density ratio $\alpha$ may include the color density ratio and a ratio calculated based on the reflective light detection signal in the infrared range. Further, the light receiving unit 13 may output, as the reflective light detection signal, the reflective light detection signals in the red (R), green (G), and blue (B) wavelength bands, and the reflective light detection signal in the infrared range. The density ratio $\alpha$ may include a ratio calculated based on the reflective light detection signals in the R, G, and B wavelength bands, and a ratio calculated based on the reflective light detection signal in the infrared range. In these cases, the values calculated using the above formulas (C1) to (C3) and (D) may be used as the fluorescence emission amount of the fluorescent ink.

The sheet recognition unit 1 may calculate the density ratio $\alpha$ during the handling of the banknote BN to be recognized. That is, while the banknote BN to be recognized is being handled, the calculation unit 22 may calculate the density ratio $\alpha$ based on the reflective light detection signal of the printed portion FL and the reflective light detection signal of the non-printed portion PP. This banknote BN may be recognized using the density ratio $\alpha$.

On the other hand, the density ratio $\alpha$ may be set in advance. That is, the density ratio $\alpha$ may be calculated in advance at a stage before the banknote BN to be recognized is handled. In this case, the density ratio $\alpha$ may be calculated from a genuine banknote of the same denomination as that of the banknote BN to be recognized.

The recognition unit 23 may determine authenticity of the printed portion to be recognized, that is, the fluorescent ink to be recognized, depending on whether the value F, which is calculated by the calculation unit 22 and relates to the banknote BN to be recognized, that is, the fluorescence emission amount of the fluorescent ink, the fluorescence emission amount being calculated by the calculation unit 22, falls within an allowable range with respect to the reference data.

The recognition unit 23 may compare the value F itself with the reference data or compare the evaluation value based on the value F with the reference data. As the evaluation value, for example, a ratio between two fluorescence emission amounts in different wavelength bands may be used. In this case, the recognition unit 23 may calculate the ratio between the two fluorescence emission amounts of a banknote to be recognized in different wavelength bands, and recognize the printed portion to be recognized, depending on whether the ratio falls within an allowable range with respect to the ratio included in the reference data. Thus, the authentication of fluorescent ink can be performed with higher accuracy. Here, examples of the different wavelength bands include a combination of a red (R), green (G), or blue (B) wavelength band and an infrared or near-infrared wavelength band.

The "reference data" referred to by the recognition unit 23 is information for defining a standard (for example, a threshold) regarding a fluorescence emission amount of (genuine) fluorescent ink acceptable as a genuine banknote. The information may include, for example, an upper limit value and a lower limit value of the fluorescence emission amount or the evaluation value of the fluorescent ink. The fluorescence emission amount and the evaluation value are respectively measured and calculated in corresponding places of the genuine banknote similarly to the value F. When a determination is made whether a certain value F or an evaluation value thereof falls within the allowable range with respect to the reference data, the determination may be made whether the value F or the evaluation value thereof is between the upper limit value and the lower limit value of the fluorescence emission amount of the fluorescent ink or the evaluation value thereof defined by the reference data.

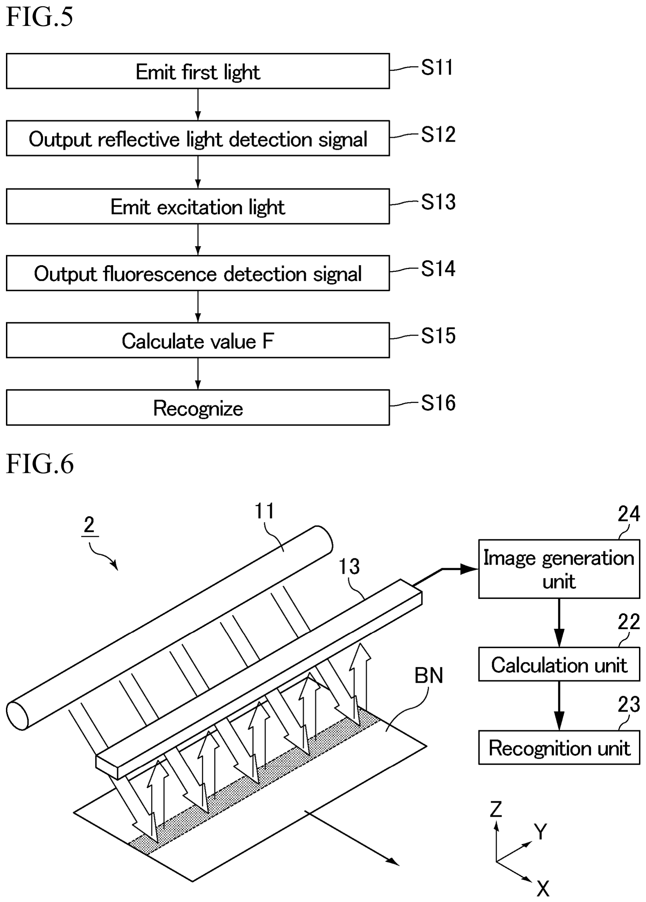

An operation of the sheet recognition unit 1 according to the present embodiment will be described below with reference to FIG. 5.

As illustrated in FIG. 5, first, the light source 11 emits first light to the banknote BN to be recognized (step S11).

Further, the light receiving unit 13 receives reflective light obtained by reflecting the first light from the banknote BN, and outputs a reflective light detection signal (step S12). The period during which the light receiving unit 13 receives the reflective light temporally overlaps with the period during which the light source 11 emits the first light.

Thereafter, the light source 11 emits excitation light to the banknote BN to be recognized (step S13).

Further, the light receiving unit 13 receives fluorescence emitted from the banknote BN irradiated with the excitation light, and outputs a fluorescence detection signal (step S14). The period during which the light receiving unit 13 receives the fluorescence temporally overlaps with the period during which the light source 11 emits the excitation light.

The order of steps S11 and S12 of emitting the first light and receiving the reflective light thereof and steps S13 and S14 of emitting the excitation light and receiving the fluorescence resulting therefrom is not limited. These steps may be repeated over the entire surface of the banknote BN.

The calculation unit 22 calculates the value P by multiplying the output value of the fluorescence detection signal of the non-printed portion PP by the density ratio $\alpha$ between the reflective light detection signal of the printed portion FL to be recognized and the reflective light detection signal of the non-printed portion PP, and calculates the value F by subtracting the value P from the output value of the fluorescence detection signal of the printed portion FL (step S15).

Thereafter, the recognition unit 23 recognizes the banknote BN to be recognized, based on the value F calculated by the calculation unit 22 (step S16), and the operation of the sheet recognition unit 1 ends.

The calculation unit 22 and the recognition unit 23 may be operated by a control unit, described later, executing appropriate programs.

(Second Embodiment)

In the present embodiment, a case where the above-described recognition processing is performed based on a reflective light image and a fluorescent image will be described in more detail.

As illustrated in FIG. 6, a sheet recognition unit 2 according to the present embodiment further includes an image generation unit 24 in addition to the light source 11, the light receiving unit 13, the calculation unit 22, and the recognition unit 23 described in the first embodiment.

The image generation unit 24 generates a reflective light image based on a reflective light detection signal output from the light receiving unit 13, and generates a fluorescent image based on a fluorescence detection signal output from the light receiving unit 13.

The calculation unit 22 acquires the reflective light detection signals of the printed portion FL and the non-printed portion PP based on the reflective light image, and acquires the fluorescence detection signals of the printed portion FL and the non-printed portion PP based on the fluorescent image. In this case, a pixel value of a corresponding pixel of corresponding image data may be used as the output values of the reflective light detection signal and the fluorescence detection signal.

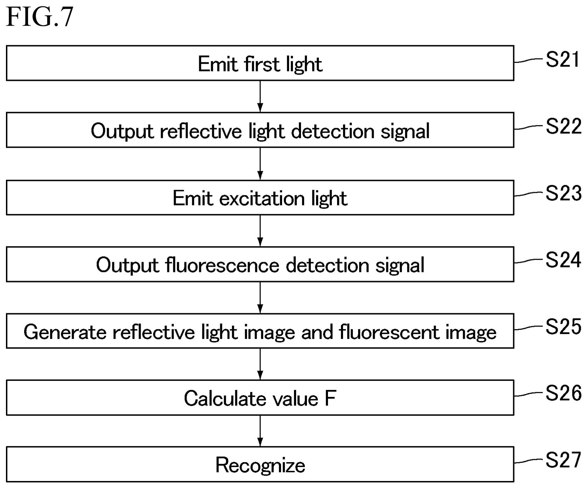

An operation of the sheet recognition unit 2 according to the present embodiment will be described below with reference to FIG. 7.

As illustrated in FIG. 7, first, similarly to steps S11 to S14 described in the first embodiment, first light and excitation light are emitted, and the reflective light detection signal and the fluorescence detection signal are output (steps S21 to S24). These steps are repeated over the entire surface of the banknote BN.

The order of steps S21 and S22 of emitting the first light and receiving the reflective light thereof and steps S23 and S24 of emitting the excitation light and receiving the fluorescence resulting therefrom is not limited.

The image generation unit 24 then generates a reflective light image based on the reflective light detection signal output in step S22, and generates a fluorescent image based on the fluorescence detection signal output in step S24 (step S25).

The calculation unit 22 calculates the density ratio $\alpha$ based on the reflective light image, and calculates a value P and a value F (see the first embodiment) based on the fluorescent image (step S26).

Thereafter, the recognition unit 23 recognizes the banknote BN to be recognized, based on the value F calculated by the calculation unit 22 (step S27), and the operation of the sheet recognition unit 2 ends.

Similarly to the calculation unit 22 and the recognition unit 23, the image generation unit 24 may be operated by a control unit, described later, executing an appropriate program.

(Third Embodiment)

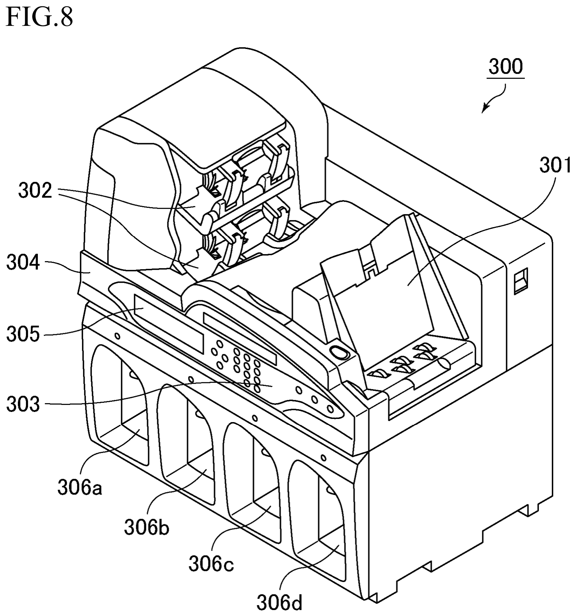

A sheet handling device according to the present embodiment may have, for example, a configuration illustrated in FIG. 8. A sheet handling device 300 illustrated in FIG. 8 is a small sheet handling device installed and used on a table. This device includes a sheet recognition unit (not illustrated in FIG. 8), a hopper 301, two rejection units 302, an operation unit 303, four stacking units 306a to 306d, and a display unit 305. The sheet recognition unit executes banknote recognition processing. On the hopper 301, a plurality of banknotes to be handled is placed in a stacked state. The rejection units 302 reject a rejection banknote when the banknote fed from the hopper 301 into a housing 304 is a rejection banknote, such as a counterfeit note or a suspect note. The operation unit 303 is for inputting an instruction from an operator. The stacking units 306a to 306d are for sorting and stacking banknotes whose denominations, authenticity, and fitness have been recognized in the housing 304. The display unit 305 is for displaying information such as recognition and count results of banknotes and the stacking statuses of the stacking units 306a to 306d. Among the four stacking units 306a to 306d, fit notes are stored in the stacking units 306a to 306c, and soiled notes are stored in the stacking unit 306d based on the result of the fitness determination by the sheet recognition unit. A method for distributing banknotes into the stacking units 306a to 306d can be optionally set.

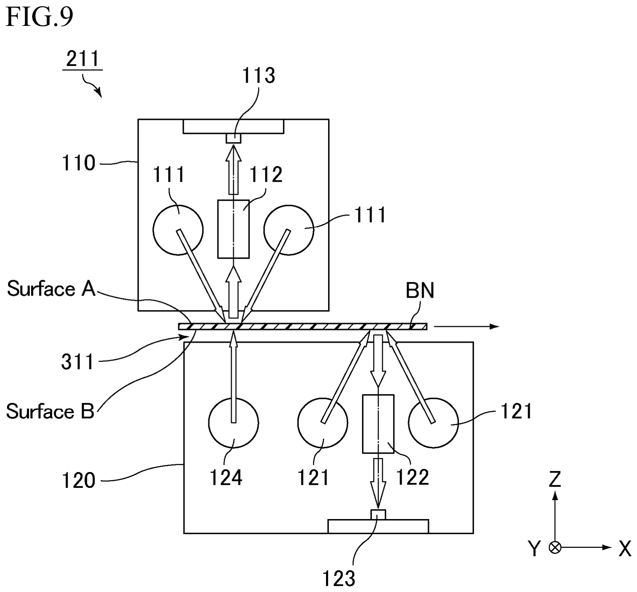

A configuration of an imaging unit that is a main unit of the sheet recognition unit according to the present embodiment will be described below with reference to FIG. 9. As illustrated in FIG. 9, an imaging unit 211 includes an upper unit 110 and a lower unit 120 disposed to face each other. A gap through which a banknote BN is transported in an X direction in an XY plane is formed between the upper unit 110 and the lower unit 120 separated from each other in a Z direction. This gap constitutes a part of a transport path of the sheet handling device according to the present embodiment. The upper unit 110 and the lower unit 120 are positioned on the upper side (+Z direction) and the lower side (-Z direction) of the transport path, respectively. The Y direction corresponds to a main scanning direction of the imaging unit 211, and the X direction corresponds to a sub-scanning direction of the imaging unit 211.

As illustrated in FIG. 9, the upper unit 110 includes two light sources 111 for reflection, a condensing lens 112, and a light receiving unit 113. The light source 111 for reflection sequentially irradiates a main surface (hereinafter, surface A) of the banknote BN on the light receiving unit 113 side with irradiation light having different wavelength bands, specifically, infrared light, white light including red light, green light, and blue light, and ultraviolet light as excitation light for fluorescence. The condensing lens 112 condenses light emitted from the light source 111 for reflection and reflected from the surface A of the banknote BN, light emitted from a light source 124 for transmission disposed in the lower unit 120 and transmitted through the banknote BN, and fluorescence emitted on the surface A of the banknote BN. The light receiving unit 113 receives the light condensed by the condensing lens 112 and converts the light into an electric signal. After the electric signal is amplified, the electric signal is A-D converted into digital data and then the digital data is output. Here, the light received by the light receiving unit is also referred to as incident light, and the light emitted from the light source is also referred to as irradiation light.

The lower unit 120 includes two light sources 121 for reflection, one light source 124 for transmission, a condensing lens 122, and a light receiving unit 123. The light source 121 for reflection sequentially irradiates a main surface (hereinafter, surface B) of the banknote BN on the light receiving unit 123 side with irradiation light having different wavelength bands, specifically, infrared light, white light including red light, green light, and blue light, and ultraviolet light as excitation light for fluorescence. The condensing lens 122 condenses light emitted from the light source 121 for reflection and reflected from the surface B of the banknote BN, and the fluorescence emitted on the surface B of the banknote BN. The light receiving unit 123 receives the light condensed by the condensing lens 122 and converts the light into an electric signal. After the electric signal is amplified, the electric signal is A-D converted into digital data and then the digital data is output.

The light source 124 for transmission is disposed on an optical axis of the condensing lens 112 of the upper unit 110. The light emitted from the light source 124 for transmission is partially transmitted through the banknote BN, is condensed by the condensing lens 112 of the upper unit 110, and is detected by the light receiving unit 113. The light source 124 for transmission may sequentially or simultaneously irradiate the surface B of the banknote BN with irradiation light having different wavelength bands.

In this specification, light having different wavelength bands (irradiation light, incident light, etc.) is, for example, light having different colors as visible light, and is light having wavelength bands partially overlapping or light having non-overlapping wavelength bands as infrared light and ultraviolet light.

Each of the light sources 111, 121, and 124 includes a linear light guide (not illustrated) extending in a direction (main scanning direction D1) perpendicular to the sheet surface of FIG. 9, and a plurality of light-emitting diode (LED) elements (not illustrated) disposed at both ends (or one end) of the light guide.

Each of the light sources 111 and 121 may include an LED element that emits infrared light having a peak wavelength of 750 nm or more, an LED element that emits red light (R) having a peak wavelength of 600 nm or more and less than 750 nm, an LED element that emits green light (G) having a peak wavelength of 500 nm or more and less than 600 nm, an LED element that emits blue light (B) having a peak wavelength of 400 nm or more and less than 500 nm, and an LED element that emits ultraviolet light (UV) having a peak wavelength of less than 400 nm. One light source 111 is disposed on each of the upstream side and downstream side in the transport direction with the condensing lens 112 being interposed therebetween. One light source 121 is disposed on each of the upstream side and downstream side in the transport direction with the condensing lens 122 being interposed therebetween.

The light source 124 may include a plurality of LED elements that emit light having peak wavelengths different from each other. Note that the peak wavelength means a wavelength at which light emission intensity is maximum.

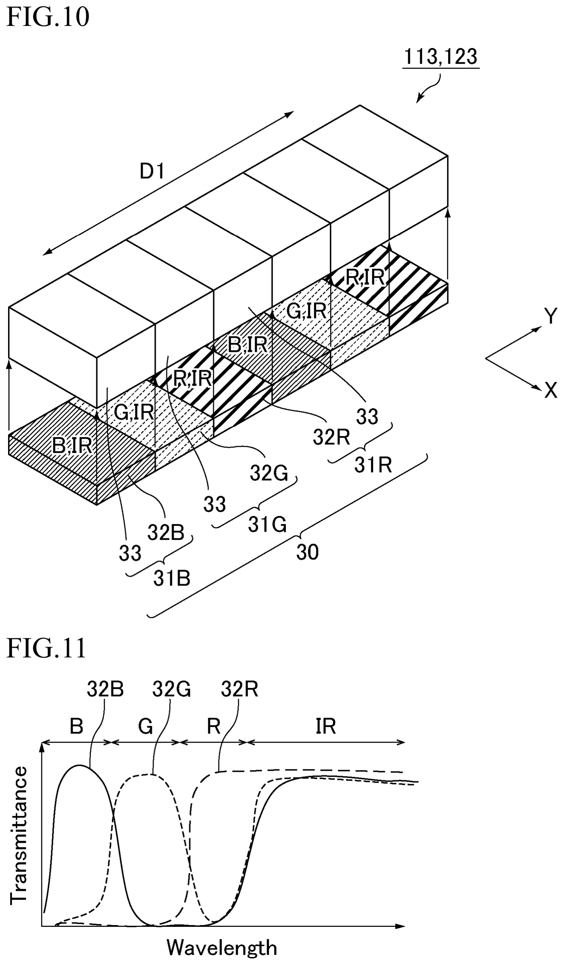

As illustrated in FIG. 10, in the present embodiment, each of light receiving units 113 and 123 includes a first light receiving element 31B including a color filter 32B, a second light receiving element 31G including a color filter 32G, and a third light receiving element 31R including a color filter 32R.

More specifically, each of the light receiving units 113 and 123 includes a plurality of pixels 30 arranged in a line in the main scanning direction D1(direction orthogonal to the transport direction of the banknote BN, i.e. the Y direction). Each pixel 30 includes one first light receiving element (imaging element) 31B, one second light receiving element (imaging element) 31G, and one third light receiving element (imaging element) 31R. Further, the first light receiving element 31B, the second light receiving element 31G, and the third light receiving element 31R are disposed in a line along the main scanning direction D1 in this order.

Here, the light receiving element (imaging element) means an element that detects the intensity of light in a predetermined wavelength band (converts into an electric signal). The light receiving element may include a photodetector such as a photodiode, and a color filter (color resist) that is disposed on a light receiving surface of the photodetector and reduces transmission of light in wavelength bands (for example, green and red wavelength bands) excluding predetermined wavelength bands (for example, blue and infrared wavelength bands) to be detected.

As illustrated in FIG. 10, the first light receiving element 31B may include a photodetector 33 and the color filter 32B, the second light receiving element 31G may include the photodetector 33 and the color filter 32G, and the third light receiving element 31R may include the photodetector 33 and the color filter 32R.

As illustrated in FIG. 11, the color filter 32B transmits blue light and infrared light, the color filter 32G transmits green light and infrared light, and the color filter 32R transmits red light and infrared light. Therefore, the first light receiving element 31B, the second light receiving element 31G, and the third light receiving element 31R receive infrared light together with the corresponding visible light. The color filter 32B absorbs green light and red light, the color filter 32G absorbs blue light and red light, and the color filter 32R absorbs blue light and green light.

Therefore, each of the light receiving units 113 and 123 collectively receives reflective light or fluorescence in the visible range and reflective light or fluorescence in the infrared range emitted from the banknote BN without separating them, and outputs a reflective detection signal or a fluorescence detection signal including a signal value that depends on the light amount of the sum of both the components. Therefore, the spectral overlap correction is required.

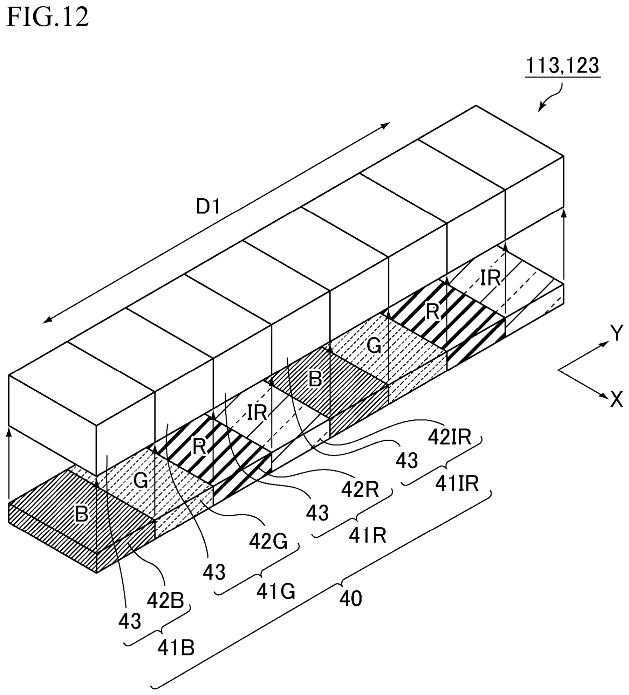

On the other hand, as illustrated in FIG. 12, in the present embodiment, each of the light receiving units 113 and 123 may include a first light receiving element 41B having a color filter 42B, a second light receiving element 41G having a color filter 42G, a third light receiving element 41R having a color filter 42R, and a fourth light receiving element 41IR having a color filter 42IR.

More specifically, each of the light receiving units 113 and 123 may include a plurality of pixels 40 arranged in a line in the main scanning direction D1(direction orthogonal to the transport direction of the banknote BN, i.e. the Y direction). Each pixel 40 may include one first light receiving element (imaging element) 41B, one second light receiving element (imaging element) 41G, one third light receiving element (imaging element) 41R, and one fourth light receiving element (imaging element) 41IR. The first light receiving element 41B, the second light receiving element 41G, the third light receiving element 41R, and the fourth light receiving element 41IR may be arranged in a line in this order in the main scanning direction D1.

As illustrated in FIG. 12, the first light receiving element 41B may include a photodetector 43 and the color filter 42B, the second light receiving element 41G may include the photodetector 43 and the color filter 42G, the third light receiving element 41R may include the photodetector 43 and the color filter 42R, and the fourth light receiving element 41IR may include the photodetector 43 and the color filter 42IR.

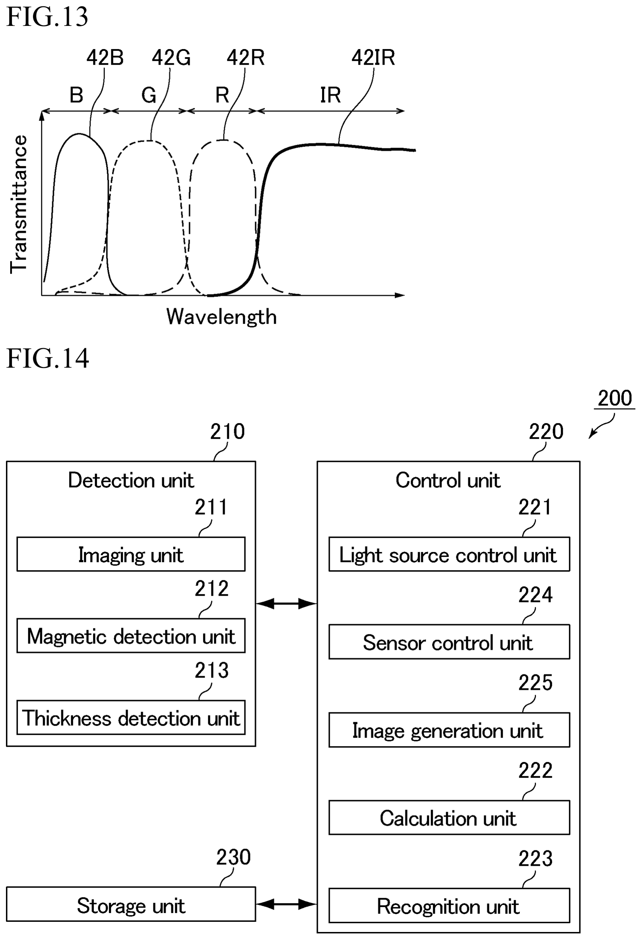

As illustrated in FIG. 13, the color filter 42B transmits blue light, the color filter 42G transmits green light, the color filter 42R transmits red light, but the color filter 42B, the color filter 42G, and the color filter 42R do not transmit infrared light. Therefore, the first light receiving element 41B, the second light receiving element 41G, and the third light receiving element 41R receive only corresponding visible light but do not receive infrared light. The color filter 42B absorbs green light, red light, and infrared light. The color filter 42G absorbs blue light, red light, and infrared light. The color filter 42R absorbs blue light, green light, and infrared light. The color filter 42IR transmits infrared light but does not transmit visible light and absorbs the visible light.

Therefore, in this case, each of the light receiving units 113 and 123 separates the reflective light or fluorescence in the visible range from the reflective light or fluorescence in the infrared range, the reflective light or the fluorescence being emitted from the banknote BN, then independently receives the light, and outputs signal values that depend on the light amounts of the respective components. Thus, the spectral overlap correction is unnecessary.

Each of the upper unit 110 and the lower unit 120 repeatedly images the banknote BN transported in the transport direction and outputs a signal that depends on a light receiving amount. As a result, the imaging unit 211 acquires an image of the entire banknote BN. Specifically, the imaging unit 211 acquires a transmissive light image of the banknote BN and a reflective light image of the surface A based on the output signal from the upper unit 110, and acquires a reflective light image of the surface B of the banknote BN based on the output signal from the lower unit 120.

The imaging unit 211 further acquires a fluorescence detection signal for the entire banknote BN on each of the surface A and the surface B of the banknote BN. That is, the imaging unit 211 can acquire the fluorescent images of the surface A and the surface B of the banknote BN.

A configuration of the sheet recognition unit according to the present embodiment will be described below with reference to FIG. 14. As illustrated in FIG. 14, a sheet recognition unit 200 according to the present embodiment includes a detection unit 210, a control unit 220, and a storage unit 230.

The control unit 220 is a controller that controls respective units of the sheet recognition unit 200. The control unit 220 includes a program for implementing various types of processing stored in the storage unit 230, a central processing unit (CPU) that executes the program, and various types of hardware (for example, a field programmable gate array (FPGA)) controlled by the CPU. The control unit 220 controls respective units of the sheet recognition unit 200 based on signals output from the respective units of the sheet recognition unit 200 and control signals from the control unit 220 in accordance with the program stored in the storage unit 230. The control unit 220 further has functions of a light source control unit 221, a sensor control unit 224, an image generation unit 225, a calculation unit 222, and a recognition unit 223 in accordance with a program stored in the storage unit 230.

The detection unit 210 includes a magnetic detection unit 212 and a thickness detection unit 213 in addition to the above-described imaging unit 211 along the transport path of a banknote. The imaging unit 211 images a banknote and outputs an image signal (image data) as described above. The magnetic detection unit 212 includes a magnetic sensor (not illustrated) that measures magnetism. The magnetic sensor detects magnetism of magnetic ink, a security thread, etc. printed on a banknote. The magnetic sensor is a magnetic line sensor in which a plurality of magnetic detection elements is arranged in a line. The thickness detection unit 213 includes a thickness detection sensor (not illustrated) that measures a thickness of a banknote. The thickness detection sensor detects tape, multi feed, etc. As for the thickness detection sensor, a sensor disposed at each roller detects a displacement amount during passing of a banknote at rollers facing each other with the transport path interposed therebetween.

The storage unit 230 includes a nonvolatile storage device such as a semiconductor memory or a hard disk, and stores various programs and various data for controlling the sheet recognition unit 200. The storage unit 230 further stores, as imaging parameters, a wavelength band of irradiation light emitted from each of the light sources 111, 121, and 124 during one cycle of imaging by the imaging unit 211, a timing of turning on and off each of the light sources 111, 121, and 124, a value of a forward current flowing through the LED elements of each of the light sources 111, 121, and 124, a timing of reading a signal from each of the upper unit 110 and the lower unit 120, and the like.

Note that the imaging in one cycle refers to an imaging pattern in which the wavelength band of the irradiation light emitted from each of the light sources 111, 121, and 124, and the timing of turning on and off each of the light sources 111, 121, and 124, and signal reading are set. An image of the entire banknote is acquired by continuously and repeatedly executing the imaging in one cycle as one period.

The light source control unit 221 makes dynamic lighting control of each of the light sources 111, 121, and 124 in order to capture an individual image of a banknote obtained using each of the light sources 111, 121, and 124. Specifically, the light source control unit 221 controls turning-on and turning-off of the light sources 111, 121, and 124 based on the timing set as the imaging parameter. This control is made using a mechanical clock that changes depending on the transport speed of a banknote and a system clock that is always output at a constant frequency regardless of the transport speed of a banknote.

The sensor control unit 224 controls a timing of reading a signal from each of the upper unit 110 and the lower unit 120 based on the timing set as the imaging parameter, and reads a signal from each of the upper unit 110 and the lower unit 120 in synchronization with the timing of turning on and off the light sources 111, 121, and 124. This control is performed using the mechanical clock and the system clock. The sensor control unit 224 then sequentially stores the read signals, that is, the line data in a ring buffer (line memory) of the storage unit 230.

The line data means data based on a signal obtained by each of the upper unit 110 and the lower unit 120 performing one imaging, and corresponds to data for one row in a horizontal direction (direction orthogonal to the transport direction of a banknote, i.e., the Y direction) of the acquired image.

The image generation unit 225 has a function of generating an image based on various signals related to a banknote acquired from the detection unit 210. Specifically, the image generation unit 225 first decomposes the data (image signal) stored in the ring buffer into data for each condition of light irradiation and light reception. The image generation unit 225 then executes correction processing for cutting a dark output, adjusting gain, and correcting a bright output level in accordance with the characteristic of each piece of decomposed data, generates various types of image data of the banknote, and stores the image data in the storage unit 230.

The image generation unit 225 makes a spectral overlap correction on the reflective light detection signal and the fluorescence detection signal acquired by the imaging unit 211 as necessary.

The calculation unit 222 calculates the value P by multiplying the output value of the fluorescence detection signal of the non-printed portion PP by the density ratio $\alpha$ between the reflective light detection signal of the printed portion FL of the banknote BN to be recognized and the reflective light detection signal of the non-printed portion PP of the banknote BN, and calculates the value F by subtracting the value P from the output value of the fluorescence detection signal of the printed portion FL.

The recognition unit 223 then recognizes the banknote BN to be recognized, based on the value F calculated by the calculation unit 222.

The arithmetic processing by the calculation unit 222 will be described more specifically.

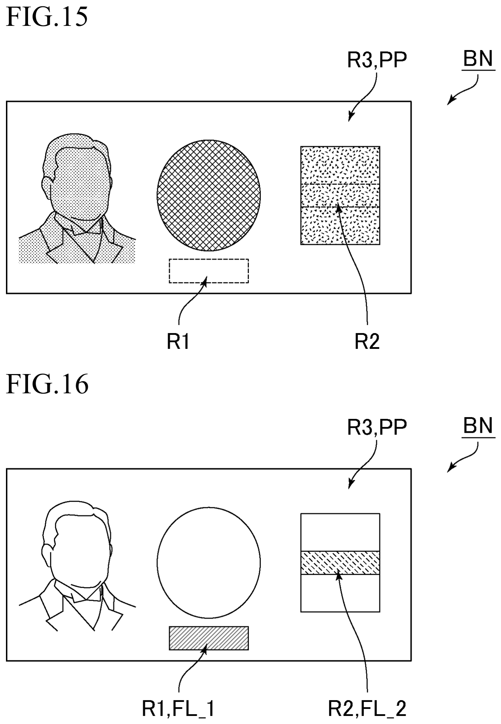

As illustrated in FIG. 15, in the reflective light image of the banknote BN to be recognized, a region printed in color is present in a predetermined region. As illustrated in FIG. 16, regions R1 and R2 where fluorescent ink to be authenticated has been printed are present in the fluorescent image of the banknote BN to be recognized. Fluorescent inks having light emission characteristics different from each other are assumed to be printed in the regions R1 and R2. Printed portions FL_1 and FL_2 to be recognized exist in the regions R1 and R2, respectively. The printed portion FL_1 is a portion where the fluorescent ink is printed on a white sheet portion of the banknote BN. The printed portion FL_2 is a portion where the color printing is performed and the fluorescent ink is printed on the white sheet portion of the banknote BN. In the reflective light image and the fluorescent image of the banknote BN to be recognized, a region R3 where no ink is printed, that is, the non-printed portion PP exists.

The calculation unit 222 first acquires color data W_0 (B, G, and R) and UV_0 (B, G, and R) of the non-printed portion PP from the reflective light image and the fluorescent image. The color data W_0 (B, G, and R) indicates the output values of the red, green, and blue reflective light detection signals of the non-printed portion PP. The color data UV_0 (B, G, and R) indicates the output values of the red, green, and blue fluorescence detection signals of the non-printed portion PP. For example, output values as shown in the following Tables 1 and 2 are obtained.

[Table 1]

|   | W_0 | W_1 | W_2 |
|---|---|---|---|
| B | 200 | 200 | 100 |
| G | 200 | 200 | 100 |
| R | 200 | 200 | 100 |

[Table 2]

|   | UV_0 | UV_1 | UV_2 |
|---|------|------|------|
| B | 20 | 35 | 18 |
| G | 10 | 50 | 30 |
| R | 5 | 16 | 8 |

]

The calculation unit 222 acquires color data W_n (B, G, and R) and UV_n (B, G, and R) of the printed portions FL_1 and FL_2 from the reflective light image and the fluorescent image. The color data W_n (B, G, and R) indicates the output values of the red, green, and blue reflective light detection signals of the printed portions FL_1 and FL_2. The color data UV_n (B, G, and R) indicates the output values of the red, green, and blue fluorescence detection signals of the printed portions FL_1 and FL_2. Further, n represents 1 or 2, W_1 (B, G, and R) and UV_1 (B, G, and R) represent output values of the printed portion FL_1, and W_2 (B, G, and R) and UV_2 (B, G, and R) represent output values of the printed portion FL_2. For example, output values as shown in the above Tables 1 and 2 are obtained.

The calculation unit 222 calculates a color density ratio $\alpha$_n (B, G, and R) for each of the R, G, and B wavelength bands using the following formula (E).

$$\alpha\_n\ (B, G, \text{ and } R) = W\_n\ (B, G, \text{ and } R)/W\_0\ (B, G, \text{ and } R) \qquad (E)$$

Here, n represents 1 or 2, $\alpha$_1 (B, G, and R) represents the color density ratio between the printed portion FL_1 and the non-printed portion PP, and $\alpha$_2 (B, G, and R) represents the color density ratio between the printed portion FL_2 and the non-printed portion PP. For example, in the case shown in above Table 1, the color density ratio $\alpha$_n (B, G, and R) as shown in Table 3 below is obtained.

[Table 3]

|   | $\alpha$_1 | $\alpha$_2 |
|---|------|------|
| B | 1 | 0.5 |
| G | 1 | 0.5 |
| R | 1 | 0.5 |

The calculation unit 222 then calculates F_n (B, G, and R) for the R, G, and B wavelength bands using the following formula (F).

F_n (B, G, and R) = UV_n (B, G, and R) - $\alpha$_n (B, G, and R) $\times$ UV_0 (B, G, and R) (F)　　　　　　　　　(F)

Here, n represents 1 or 2, F_1 (B, G, and R) corresponds to the fluorescence emission amount of the fluorescent ink of the printed portion FL_1, and F_2 (B, G, and R) corresponds to the fluorescence emission amount of the fluorescent ink of the printed portion FL_2. Further, $\alpha$_n (B, G, and R) $\times$ UV_0 (B, G, and R) corresponds to a fluorescence emission amount P_1 of a base (white sheet) of the printed portion FL_1, and F_2 (B, G, and R) corresponds to a fluorescence emission amount P_2 of a base (white sheet) of the printed portion FL_2. For example, in the cases shown in the above Table 1 and Table 2, a fluorescence emission amount P_n (B, G, and R) of the base (white sheet) of the printed portion as shown in the following Table 4 is obtained, and a fluorescence emission amount F_n (B, G, and R) of the fluorescent ink of the printed portion as shown in the following Table 5 is obtained.

[Table 4]

|   | P_1 | P_2 |
|---|------|------|
| B | 20 | 10 |
| G | 10 | 5 |
| R | 5 | 2.5 |

[Table 5]

|   | F_1 | F_2 |
|---|-----|-----|
| B | 15 | 8 |
| G | 40 | 25 |
| R | 11 | 5.5 |

Hereinafter, the results of evaluating the effectiveness of the method for calculating the fluorescence emission amount of the fluorescent ink according to the present disclosure using a test medium on which the fluorescent ink has been printed will be described.

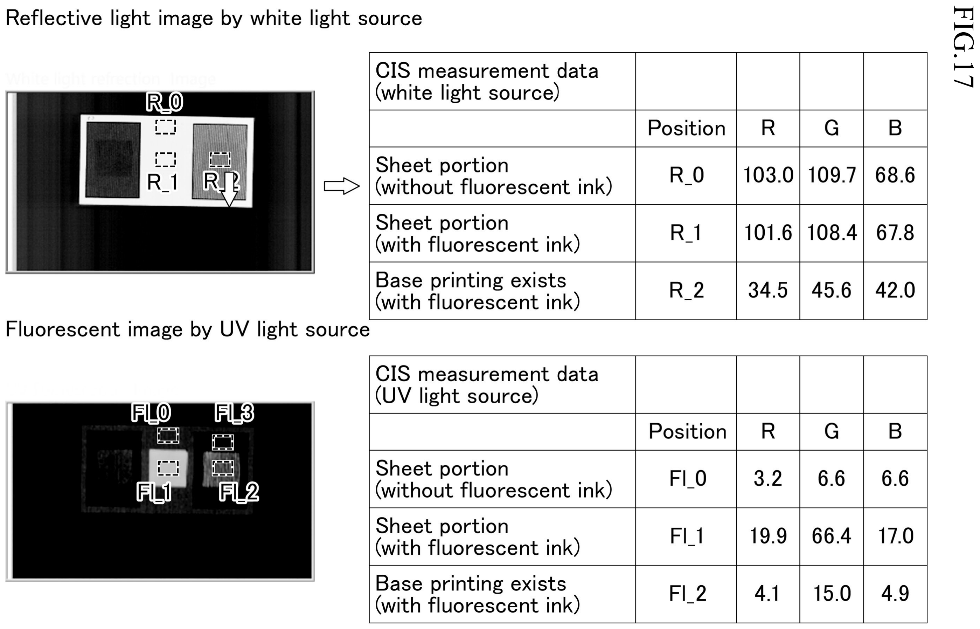

In this test medium, as shown in the reflective light image by a white light source in FIG. 17, cyan of two shades has been printed on the right and left of a white sheet as a base, and as shown in the fluorescent image by a UV light source in FIG. 17, the fluorescent ink that emits green light has been printed on the central portion of each of the right and left cyan printed portions and the white sheet portion between the right and left cyan printed portions.

The upper right part of FIG. 17 shows measurement data at a time when the reflective light image by the white light source has been captured by a contact image sensor (CIS). The upper right part of FIG. 17 shows color data (B, G, and R) of a region R_0 where nothing is printed on the white sheet portion, a region R_1 where the fluorescent ink is printed on the white sheet portion, and a region R_2 where light cyan and the fluorescent ink are printed on the white sheet portion.

The lower right part of FIG. 17 shows measurement data at a time when the fluorescent image by the UV light source is captured by the contact image sensor (CIS). The lower right part of FIG. 17 shows color data (B, G, and R) of a region FI_0 where nothing is printed on the white sheet portion, a region F1_1 where the fluorescent ink is printed on the white sheet portion, and a region FI_2 where light cyan and the fluorescent ink are printed on the white sheet portion. The regions FI_0, FI_1 and FI_2 correspond to the regions R_0, R_1, and R_2, respectively.

In any measurement data, an average value in each region is calculated as the RGB value.

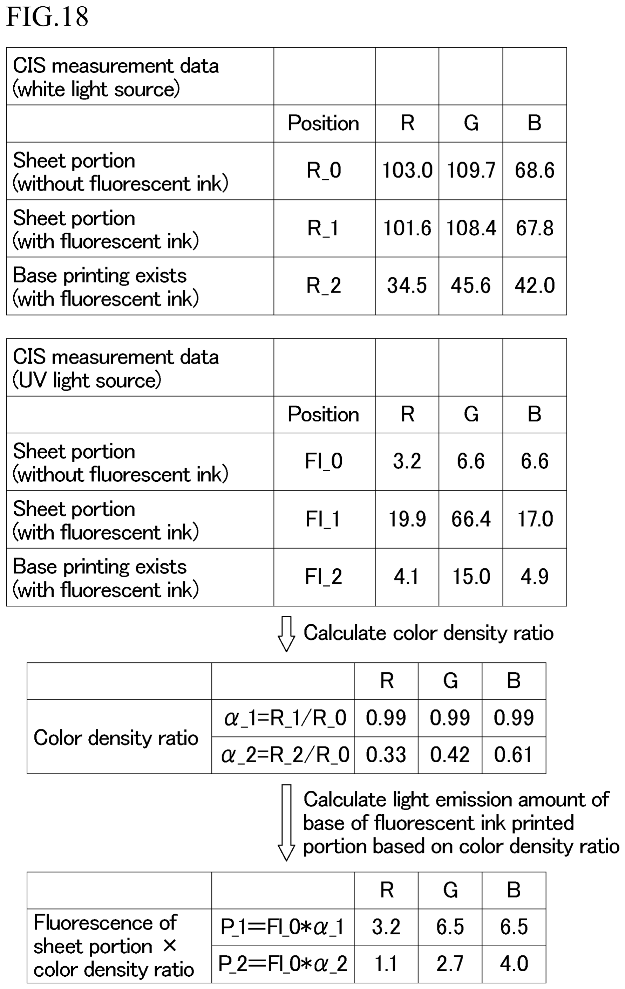

As illustrated in FIG. 18, the color density ratio $\alpha$ was calculated using these measurement data. The color density ratio $\alpha\_1$ indicates a color density ratio between the region R_1 and the region R_0, and the color density ratio $\alpha\_2$ indicates a color density ratio between the region R_2 and the region R_0. The fluorescence emission amount P of the base (white sheet) of the printed portion was calculated using the calculated color density ratio $\alpha$. That is, the color data (B, G, and R) of the region FI_0 of the fluorescent image was multiplied by the color density ratios $\alpha\_1$ and $\alpha\_2$, respectively. Here, the fluorescence emission amount P_1 corresponds to the fluorescence emission amount of the base (white sheet) of the region F1_1 where the fluorescent ink is printed on the white sheet portion, and the fluorescence emission amount P_2 corresponds to the fluorescence emission amount of the base (white sheet) of the region FI_2 where the light cyan and the fluorescent ink are printed on the white sheet portion.

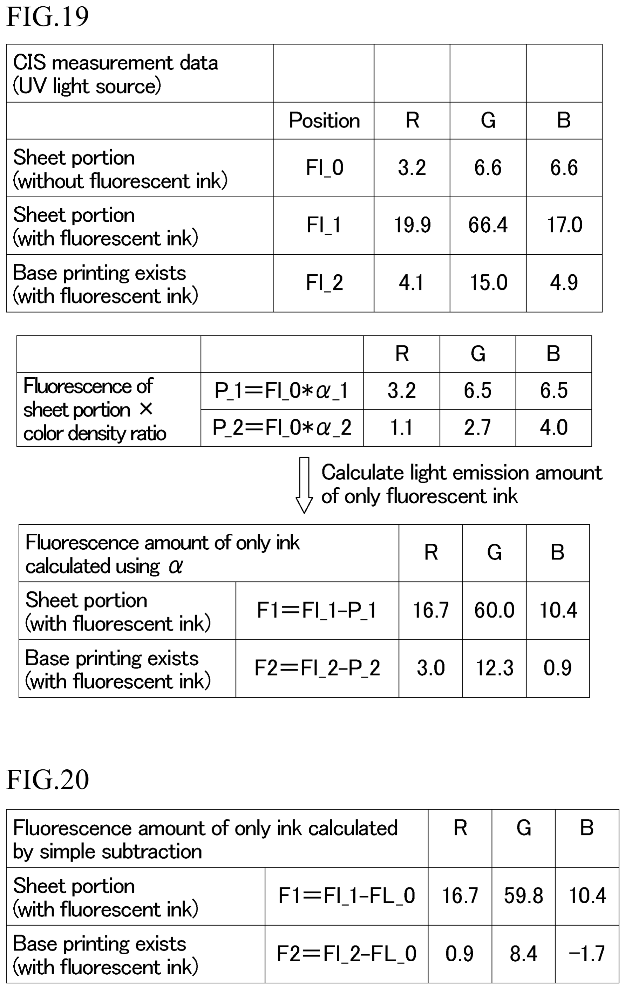

As illustrated in FIG. 19, the fluorescence emission amount of only the fluorescent ink in each of the regions F1_1 and FI_2 was calculated using these results. That is, the fluorescence emission amounts P_1 and P_2 of the base (white sheet) of the regions FI_1 and FI_2 in the fluorescent image were respectively subtracted from the color data (B, G, and R) of the regions F1_1 and FI_2 of the fluorescent image. The fluorescence emission amount F1 corresponds to the fluorescence emission amount of only the fluorescent ink in the region FI_1 where the fluorescent ink is printed on the white sheet portion, and the fluorescence emission amount F2 corresponds to the fluorescence emission amount of only the fluorescent ink in the region FI_2 where the light cyan and the fluorescent ink are printed on the white sheet portion.

FIG. 20 shows results of calculating the fluorescence emission amount of only the fluorescent ink without using the color density ratio $\alpha$. That is, the fluorescence emission amount F1 was calculated by subtracting the color data (B, G, and R) of the region FI_0 from the color data (B, G, and R) of the region FI_1 of the fluorescent image, and the fluorescence emission amount F2 was calculated by subtracting the color data (B, G, and R) of the region FI_0 from the color data (B, G, and R) of the region FI_2 of the fluorescent image.

In order to examine the fluorescence emission amount of only the fluorescent ink in the regions FI_1 and FI_2 in more detail, the fluorescence emission amount of only the fluorescent ink was estimated from the fluorescence spectrum.

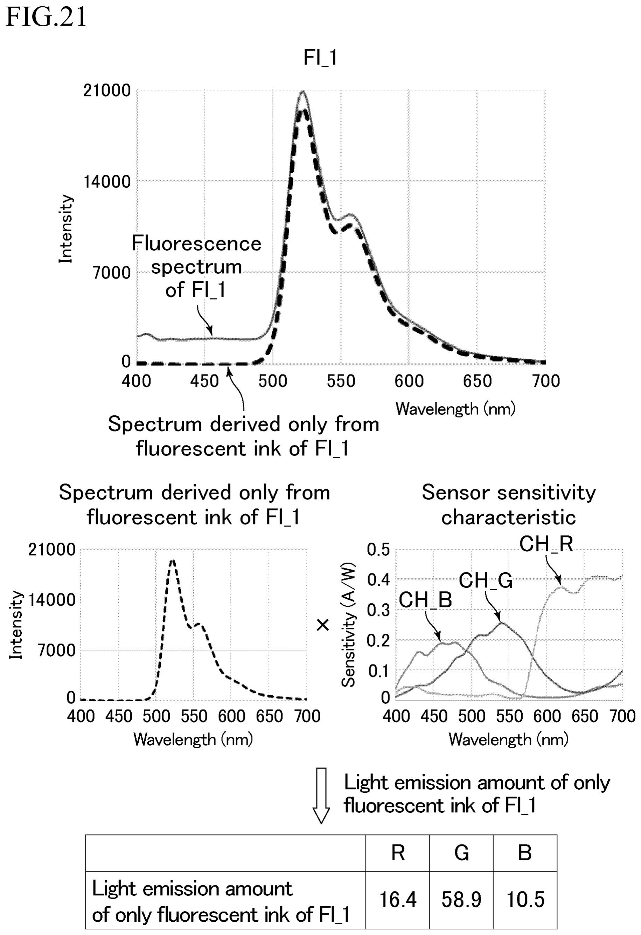

First, the upper part of FIG. 21 illustrates the fluorescence spectrum of the region FI_1. This fluorescence spectrum is considered to be a combination of a spectrum derived only from the fluorescent ink and a spectrum derived only from the white sheet portion. The spectrum derived only from the fluorescent ink corresponds to a peak portion of the fluorescence spectrum, and the spectrum derived only from the white sheet portion corresponds to a baseline portion of the fluorescence spectrum. Therefore, when the fluorescence spectrum of the region FI_0 was subtracted from the fluorescence spectrum of the region FI_1, a spectrum indicated by a broken line in the upper part of FIG. 21 was obtained. Since this spectrum includes only the peak portion without the baseline portion, this spectrum is considered to well represent the spectrum derived only from the fluorescent ink. Therefore, the fluorescence emission amount of only the fluorescent ink in the region FI_1 was calculated by multiplying the spectrum considered to be derived from only the fluorescent ink by the sensitivity characteristic of the CIS (see the middle part of FIG. 21) (see the lower part of FIG. 21).

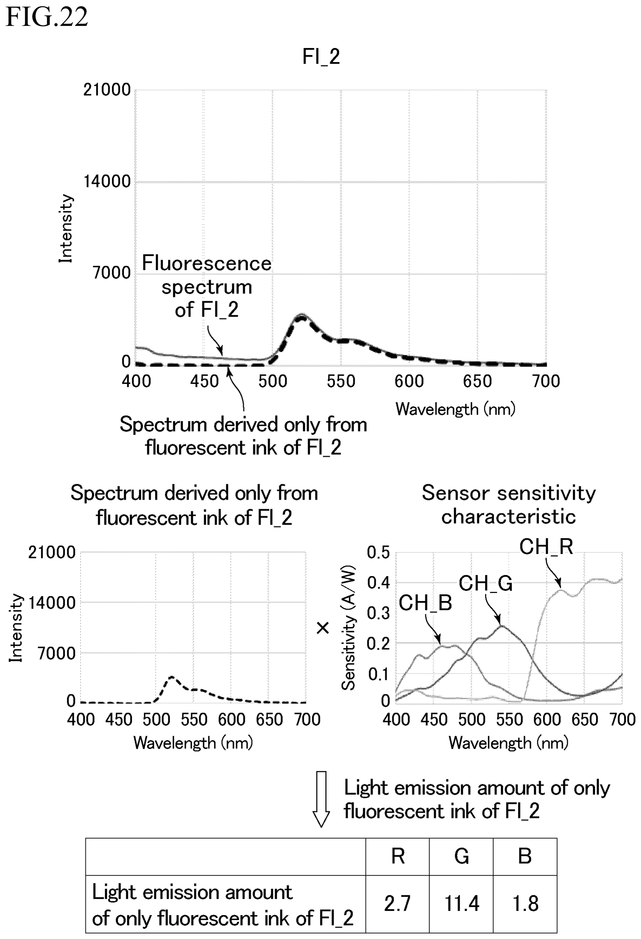

Similarly, the fluorescence emission amount of only the fluorescent ink of the region FI_2 was calculated from the fluorescence spectrum of the region FI_2 (see FIG. 22). Here, the fluorescence spectrum of the region FI_3 (see the lower left of FIG. 17) was subtracted from the fluorescence spectrum of the region FI_2. The region FI_3 is a region where light cyan is printed on a white sheet portion but the fluorescent ink is not printed thereon in the fluorescent image.

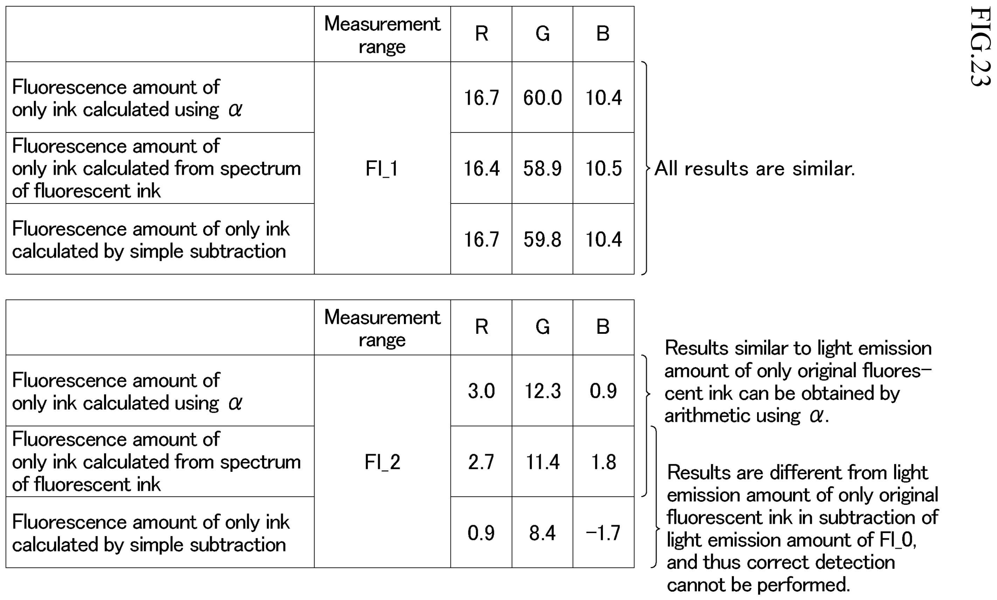

The above results are summarized in FIG. 23. As a result, as illustrated in the lower part of FIG. 23, particularly in the region FI_2 where the color printing is performed on the white sheet of the base, the fluorescence emission amount of only the fluorescent ink calculated using the color density ratio $\alpha$ is more similar to the fluorescence emission amount of only the fluorescent ink estimated from the fluorescence spectrum than the fluorescence emission amount of only the fluorescent ink calculated by simple subtraction without using the color density ratio $\alpha$.

Although cyan is printed on the base of the test medium here, also in a case where another color or a combination of a plurality of types of inks (for example, a combination selected from cyan, magenta, yellow, and the like, a combination selected from blue, red, green, and the like, gray, black, and the like) is printed on the base of the test medium, similarly, by calculating the fluorescence emission amount of only the fluorescent ink using the color density ratio $\alpha$, a result similar to the fluorescence emission amount of only the fluorescent ink estimated from the fluorescence spectrum can be obtained.

(First Modification)

In the above embodiments, the case where the light receiving unit constitutes the optical line sensor that acquires the optical data (optical characteristics) of a banknote in the entire region in the width direction of the transport path has been described. However, the light receiving unit may be a point sensor that acquires the optical data (optical characteristics) of a banknote at one point in the width direction of the transport path.

Although the embodiments have been described above with reference to the drawings, the present disclosure is not limited to the above embodiments. The configurations of the respective embodiments may be appropriately combined or modified without departing from the gist of the present disclosure.

INDUSTRIAL APPLICABILITY

As described above, the present disclosure is a technique useful for recognizing a sheet based on a fluorescence emission amount of fluorescent ink printed on the sheet.

REFERENCE SIGNS LIST

1, 2, 200: sheet recognition unit
11, 111, 121, 124: light source
13, 113, 123: light receiving unit
22, 222: calculation unit
23, 223: recognition unit
24, 225: image generation unit
30, 40: pixel
31B, 31G, 31R, 41B, 41G, 41R, 41IR: light receiving element
32B, 32G, 32R, 42B, 42G, 42R, 42IR: color filter
33, 43: photodetector
110: upper unit
112, 122: condensing lens
120: lower unit
210: detection unit
211: imaging unit
212: magnetic detection unit
213: thickness detection unit
220: control unit
221: light source control unit
224: sensor control unit
230: storage unit
300: sheet handling device
301: hopper
302: rejection unit

## EP 4 734 086 A1

303: operation unit
304: housing
305: display unit
306a to 306d: stacking unit
BN: banknote
FL, FL_1, FL_2: printed portion to be recognized
PP: non-printed portion

**Claims**

1. A sheet recognition unit, comprising:

   a light source capable of emitting at least first light and excitation light to a sheet including a printed portion to be recognized and a non-printed portion;
   a light receiving unit that receives reflective light obtained by reflecting the first light from the sheet to output a reflective light detection signal, and receives fluorescence emitted from the sheet irradiated with the excitation light to output a fluorescence detection signal;
   a calculation unit that calculates a value P obtained by multiplying an output value of a fluorescence detection signal of the non-printed portion by a density ratio $\alpha$ between a reflective light detection signal of the printed portion and a reflective light detection signal of the non-printed portion, and calculates a value F obtained by subtracting the value P from an output value of a fluorescence detection signal of the printed portion; and
   a recognition unit that recognizes the sheet based on the value F calculated by the calculation unit.

2. The sheet recognition unit according to claim 1,

   wherein the light receiving unit outputs a color detection signal as the reflective light detection signal, and
   wherein the density ratio $\alpha$ is a color density ratio.

3. The sheet recognition unit according to claim 2,

   wherein the light receiving unit outputs reflective light detection signals in R, G, and B wavelength bands as the reflective light detection signal, and
   wherein the color density ratio is calculated based on the reflective light detection signals in the R, G, and B wavelength bands.

4. The sheet recognition unit according to claim 1 or 3,

   wherein the light receiving unit outputs a reflective light detection signal in an infrared range as the reflective light detection signal, and
   wherein the density ratio $\alpha$ is calculated based on the reflective light detection signal in the infrared range.

5. The sheet recognition unit according to any one of claims 1 to 4,
   wherein the calculation unit calculates the density ratio $\alpha$ based on the reflective light detection signal of the printed portion and the reflective light detection signal of the non-printed portion during handling of a sheet to be recognized.

6. The sheet recognition unit according to any one of claims 1 to 4,
   wherein the density ratio $\alpha$ is calculated in advance at a stage before handling of a sheet to be recognized.

7. The sheet recognition unit according to any one of claims 1 to 6, further comprising an image generation unit that generates a reflective light image based on the reflective light detection signal and generates a fluorescent image based on the fluorescence detection signal,
   wherein the calculation unit acquires the reflective light detection signals of the printed portion and the non-printed portion based on the reflective light image, and acquires the fluorescence detection signals of the printed portion and the non-printed portion based on the fluorescent image.

8. The sheet recognition unit according to any one of claims 1 to 7,
   wherein the light source emits at least one of visible light or infrared light as the first light.

9. A sheet handling device, comprising the sheet recognition unit according to any one of claims 1 to 8.

10. A sheet recognition method, comprising:

emitting first light from a light source to a sheet including a printed portion to be recognized and a non-printed portion;

receiving, at a light receiving unit, reflective light obtained by reflecting the first light from the sheet to output a reflective light detection signal;

emitting excitation light from the light source to the sheet;

receiving, at the light receiving unit, fluorescence emitted from the sheet irradiated with the excitation light to output a fluorescence detection signal;

calculating a value P by multiplying an output value of a fluorescence detection signal of the non-printed portion by a density ratio $\alpha$ between a reflective light detection signal of the printed portion and a reflective light detection signal of the non-printed portion;

calculating a value F by subtracting the value P from an output value of a fluorescence detection signal of the printed portion; and

recognizing the sheet based on the value F.

11. A sheet recognition program causing a sheet recognition unit to perform processing of:

emitting first light from a light source to a sheet including a printed portion to be recognized and a non-printed portion;

receiving, at a light receiving unit, reflective light obtained by reflecting the first light from the sheet to output a reflective light detection signal;

emitting excitation light from the light source to the sheet;

receiving, at the light receiving unit, fluorescence emitted from the sheet irradiated with the excitation light to output a fluorescence detection signal;

calculating a value P by multiplying an output value of a fluorescence detection signal of the non-printed portion by a density ratio $\alpha$ between a reflective light detection signal of the printed portion and a reflective light detection signal of the non-printed portion;

calculating a value F by subtracting the value P from an output value of a fluorescence detection signal of the printed portion; and

recognizing the sheet based on the value F.

FIG.1

R3,PP

BN

R1

R2

FIG.2

R3,PP

BN

R1

R2

FL

FIG.3

FIG.4

FIG.5

| | |
|---|---|
| Emit first light | S11 |
| Output reflective light detection signal | S12 |
| Emit excitation light | S13 |
| Output fluorescence detection signal | S14 |
| Calculate value F | S15 |
| Recognize | S16 |

FIG.6

FIG.7

```
┌────────────────────────────────────────────┐
│              Emit first light              │──S21
└────────────────────────────────────────────┘
                     │
                     ▼
┌────────────────────────────────────────────┐
│     Output reflective light detection signal     │──S22
└────────────────────────────────────────────┘
                     │
                     ▼
┌────────────────────────────────────────────┐
│            Emit excitation light           │──S23
└────────────────────────────────────────────┘
                     │
                     ▼
┌────────────────────────────────────────────┐
│       Output fluorescence detection signal       │──S24
└────────────────────────────────────────────┘
                     │
                     ▼
┌────────────────────────────────────────────┐
│  Generate reflective light image and fluorescent image  │──S25
└────────────────────────────────────────────┘
                     │
                     ▼
┌────────────────────────────────────────────┐
│              Calculate value F             │──S26
└────────────────────────────────────────────┘
                     │
                     ▼
┌────────────────────────────────────────────┐
│                 Recognize                  │──S27
└────────────────────────────────────────────┘
```

FIG.8

FIG.9

FIG.10

FIG.11

FIG.12

113,123

EP 4 734 086 A1

FIG.13

FIG.14

28

FIG.15

R3,PP    BN

R1    R2

FIG.16

R3,PP    BN

R1,FL_1    R2,FL_2

FIG.17

Reflective light image by white light source

| CIS measurement data (white light source) | | | | |
|---|---|---|---|---|
| | Position | R | G | B |
| Sheet portion (without fluorescent ink) | R_0 | 103.0 | 109.7 | 68.6 |
| Sheet portion (with fluorescent ink) | R_1 | 101.6 | 108.4 | 67.8 |
| Base printing exists (with fluorescent ink) | R_2 | 34.5 | 45.6 | 42.0 |

Fluorescent image by UV light source

| CIS measurement data (UV light source) | | | | |
|---|---|---|---|---|
| | Position | R | G | B |
| Sheet portion (without fluorescent ink) | Fl_0 | 3.2 | 6.6 | 6.6 |
| Sheet portion (with fluorescent ink) | Fl_1 | 19.9 | 66.4 | 17.0 |
| Base printing exists (with fluorescent ink) | Fl_2 | 4.1 | 15.0 | 4.9 |

EP 4 734 086 A1

# FIG.18

| CIS measurement data (white light source) | | | | |
|---|---|---|---|---|
| | Position | R | G | B |
| Sheet portion (without fluorescent ink) | R_0 | 103.0 | 109.7 | 68.6 |
| Sheet portion (with fluorescent ink) | R_1 | 101.6 | 108.4 | 67.8 |
| Base printing exists (with fluorescent ink) | R_2 | 34.5 | 45.6 | 42.0 |

| CIS measurement data (UV light source) | | | | |
|---|---|---|---|---|
| | Position | R | G | B |
| Sheet portion (without fluorescent ink) | Fl_0 | 3.2 | 6.6 | 6.6 |
| Sheet portion (with fluorescent ink) | Fl_1 | 19.9 | 66.4 | 17.0 |
| Base printing exists (with fluorescent ink) | Fl_2 | 4.1 | 15.0 | 4.9 |

⇩ Calculate color density ratio

| | | R | G | B |
|---|---|---|---|---|
| Color density ratio | $\alpha\_1 = R\_1/R\_0$ | 0.99 | 0.99 | 0.99 |
| | $\alpha\_2 = R\_2/R\_0$ | 0.33 | 0.42 | 0.61 |

⇩ Calculate light emission amount of base of fluorescent ink printed portion based on color density ratio

| | | R | G | B |
|---|---|---|---|---|
| Fluorescence of sheet portion × color density ratio | $P\_1 = Fl\_0 * \alpha\_1$ | 3.2 | 6.5 | 6.5 |
| | $P\_2 = Fl\_0 * \alpha\_2$ | 1.1 | 2.7 | 4.0 |

## FIG.19

| CIS measurement data (UV light source) | | | | |
|---|---|---|---|---|
| | Position | R | G | B |
| Sheet portion (without fluorescent ink) | FI_0 | 3.2 | 6.6 | 6.6 |
| Sheet portion (with fluorescent ink) | FI_1 | 19.9 | 66.4 | 17.0 |
| Base printing exists (with fluorescent ink) | FI_2 | 4.1 | 15.0 | 4.9 |

| | | R | G | B |
|---|---|---|---|---|
| Fluorescence of sheet portion × color density ratio | $P\_1 = FI\_0 * \alpha\_1$ | 3.2 | 6.5 | 6.5 |
| | $P\_2 = FI\_0 * \alpha\_2$ | 1.1 | 2.7 | 4.0 |

⇓ Calculate light emission amount of only fluorescent ink

| Fluorescence amount of only ink calculated using $\alpha$ | | R | G | B |
|---|---|---|---|---|
| Sheet portion (with fluorescent ink) | $F1 = FI\_1 - P\_1$ | 16.7 | 60.0 | 10.4 |
| Base printing exists (with fluorescent ink) | $F2 = FI\_2 - P\_2$ | 3.0 | 12.3 | 0.9 |

## FIG.20

| Fluorescence amount of only ink calculated by simple subtraction | | R | G | B |
|---|---|---|---|---|
| Sheet portion (with fluorescent ink) | $F1 = FI\_1 - FL\_0$ | 16.7 | 59.8 | 10.4 |
| Base printing exists (with fluorescent ink) | $F2 = FI\_2 - FL\_0$ | 0.9 | 8.4 | −1.7 |

FIG.21

FI_1

Fluorescence spectrum of FI_1

Spectrum derived only from fluorescent ink of FI_1

Spectrum derived only from fluorescent ink of FI_1

Sensor sensitivity characteristic

CH_R

CH_G

CH_B

×

Light emission amount of only fluorescent ink of FI_1

|  | R | G | B |
|---|---|---|---|
| Light emission amount of only fluorescent ink of FI_1 | 16.4 | 58.9 | 10.5 |

## FIG.22

### FI_2

Fluorescence spectrum of FI_2

Spectrum derived only from fluorescent ink of FI_2

Spectrum derived only from fluorescent ink of FI_2

Sensor sensitivity characteristic

×

CH_R

CH_G

CH_B

⇓ Light emission amount of only fluorescent ink of FI_2

|  | R | G | B |
|---|---|---|---|
| Light emission amount of only fluorescent ink of FI_2 | 2.7 | 11.4 | 1.8 |

## FIG.23

| Measurement range | R | G | B | |
|---|---|---|---|---|
| Fluorescence amount of only ink calculated using $\alpha$ | 16.7 | 60.0 | 10.4 | |
| Fluorescence amount of only ink calculated from spectrum of fluorescent ink | 16.4 | 58.9 | 10.5 | FI_1 |
| Fluorescence amount of only ink calculated by simple subtraction | 16.7 | 59.8 | 10.4 | |

All results are similar.

| Measurement range | R | G | B | |
|---|---|---|---|---|
| Fluorescence amount of only ink calculated using $\alpha$ | 3.0 | 12.3 | 0.9 | |
| Fluorescence amount of only ink calculated from spectrum of fluorescent ink | 2.7 | 11.4 | 1.8 | FI_2 |
| Fluorescence amount of only ink calculated by simple subtraction | 0.9 | 8.4 | −1.7 | |

Results similar to light emission amount of only original fluorescent ink can be obtained by arithmetic using $\alpha$.

Results are different from light emission amount of only original fluorescent ink in subtraction of light emission amount of FI_0, and thus correct detection cannot be performed.

Europäisches
Patentamt
European
Patent Office
Office européen
des brevets

# EUROPEAN SEARCH REPORT

**Application Number**

EP 25 20 9377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 246 126 A1 (GLORY KOGYO KK [JP]) 20 September 2023 (2023-09-20) * paragraphs [0019] - [0102] * * figures 1-11 * ----- | 1-11 | INV. G07D7/1205 |
| A | JP 2024 007792 A (GLORY KOGYO KK) 19 January 2024 (2024-01-19) * paragraphs [0023] - [0235] * * figures 1-40 * ----- | 1-11 | |
| A | DE 102 43 051 A1 (GIESECKE & DEVRIENT GMBH [DE]) 25 March 2004 (2004-03-25) * paragraphs [0027] - [0045] * * figures 1-4 * ----- | 1-11 | |

| | |
|---|---|
| | **TECHNICAL FIELDS SEARCHED (IPC)** |
| | G07D |

The present search report has been drawn up for all claims

| Place of search | Date of completion of the search | Examiner |
|---|---|---|
| The Hague | 5 March 2026 | Bauer, Sebastian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 9377

This annex lists the patent family members relating to the patent documents cited in  the above-mentioned European search report.
The members are as contained in the European Patent Office EDP file on
The European Patent Office is in no way liable for these particulars which are merely given for the purpose of information.

05-03-2026

| Patent document cited in search report | | Publication date | Patent family member(s) | | Publication date |
|---|---|---|---|---|---|
| EP 4246126 | A1 | 20-09-2023 | AU | 2021377577 A1 | 06-07-2023 |
| | | | EP | 4246126 A1 | 20-09-2023 |
| | | | JP | 7473677 B2 | 23-04-2024 |
| | | | JP WO2022102583 A1 | | 19-05-2022 |
| | | | US | 2023282053 A1 | 07-09-2023 |
| | | | WO | 2022102583 A1 | 19-05-2022 |
| JP 2024007792 | A | 19-01-2024 | JP | 2024007792 A | 19-01-2024 |
| | | | WO | 2024009953 A1 | 11-01-2024 |
| DE 10243051 | A1 | 25-03-2004 | AU | 2003270195 A1 | 08-04-2004 |
| | | | CN | 1682250 A | 12-10-2005 |
| | | | DE | 10243051 A1 | 25-03-2004 |
| | | | EP | 1602083 A1 | 07-12-2005 |
| | | | US | 2006140468 A1 | 29-06-2006 |
| | | | WO | 2004027718 A1 | 01-04-2004 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003162748 A

- JP 7473677 B